# EUROPÄISCHE PATENTSCHRIFT

(11) **EP 3 215 099 B1**
(45) Veröffentlichungstag und Bekanntmachung des Hinweises auf die Patenterteilung: **21.11.2018**
(21) Anmeldenummer: 15781111.8
(22) Anmeldetag: 15.10.2015
(51) Int. Cl.: A61G 13/10, B25B 5/08, F16M 13/02

(54) **SPANNKLAUE ZUR ANBRINGUNG AN EINER GLEITSCHIENE EINES OPERATIONSTISCHES**
GRIPPING CLAW FOR MOUNTING ON A SLIDE RAIL OF AN OPERATING TABLE
GRIFFE DE SERRAGE À POSER SUR UNE GLISSIÈRE POUR TABLE D'OPÉRATION

(30) Priorität: 06.11.2014 DE 102014116169
(43) Veröffentlichungstag der Anmeldung: 13.09.2017
(73) Patentinhaber: Maquet GmbH, 76437 Rastatt (DE)
(72) Erfinder: PFEUFFER, Reinhard, 76477 Elchesheim-Illingen (DE); KATZENSTEIN, Bernhard, 76473 Iffezheim (DE)
(74) Vertreter: Zacco GmbH
(86) Internationale Anmeldenummer: PCT/EP2015/073899
(87) Internationale Veröffentlichungsnummer: WO 2016/071092

(56) Entgegenhaltungen:
- WO-A2-2006/110721
- DE-A1- 4 210 864
- DE-U1- 9 202 090
- US-A1- 2010 108 841

## Beschreibung

Die Erfindung betrifft eine Spannklaue zur Anbringung an einer Gleitschiene eines Operationstisches, mit einem Grundkörper mit mindestens einer zur Anlage an der Gleitschiene ausgebildeten Anlagefläche, einer an dem Grundkörper angebrachten Klemmstruktur, die ein erstes Anlageelement und ein zweites Anlageelement aufweist, und einem mit der Klemmstruktur wirkverbundenen Betätigungsorgan, durch dessen Betätigung die Klemmstruktur in einen verriegelten Zustand bringbar ist, in dem die Anlagefläche des Grundkörpers und die Anlageelemente der Klemmstruktur an der Gleitschiene anliegen.

Operationstische weisen üblicherweise längs ihrer Tischsegmente beidseitig sogenannte Gleitschienen auf, die in der Regel einen rechteckigen Querschnitt haben und dazu dienen, Zubehörteile, wie beispielsweise Lagerungshilfsmittel an dem Operationstisch in der gewünschten Position zu befestigen. Zur Befestigung der Zubehörteile werden Spannklauen verwendet, die mit dem jeweiligen Zubehörteil gekoppelt sind und an der Gleitschiene angebracht werden.

Häufig werden die Spannklauen an unterschiedlichen Modelltypen von Operationstischen eingesetzt, die sich unter anderem in den Abmessungen ihrer Gleitschienen voneinander unterscheiden. Der Anwender benötigt daher eine Spannklaue, die flexibel an Operationstischen mit unterschiedlichen Gleitschienen eingesetzt werden kann. Dabei sollte die Orientierung der Spannklaue relativ zu der Gleitschiene weitgehend unabhängig von den konkreten Schienenabmessungen stets gleich bleiben, damit die gegebenenfalls erforderliche Neupositionierung des an der Spannklaue befestigten Zubehörs möglichst einfach zu bewerkstelligen ist. Darüber hinaus erhält der Anwender durch die stets gleiche Orientierung die Gewissheit, dass die Spannklaue korrekt angebracht ist.

In der einfachsten Bauform ist eine solche in Fachkreisen auch als Spannkloben bezeichnete Spannklaue aus einem klammerförmigen Teil gebildet, das auf die Gleitschiene aufgeschoben und dann mittels einer Klemmschraube in der gewünschten Position fixiert wird. Weiter entwickelte Bauformen ermöglichen es, Spannklauen an einer beliebigen Stelle auf der Gleitschiene einzuschwenken und somit schneller an der Gleitschiene zu befestigen, ohne auf einen Zugang von einem Ende der Gleitschiene her angewiesen zu sein. Dabei ist es in der Regel notwendig, die Spannklaue beim Anbringen an der Gleitschiene zu verschwenken, wodurch das an der Spannklaue befestigte Zubehör mitverschwenkt wird. Dies hat den Nachteil, dass das Zubehör, beispielsweise eine an der Spannklaue angebrachte Seitenstütze, bei der Anbringung an der Gleitschiene mitverschwenkt und ein schon auf dem Operationstisch liegender Patient dafür zunächst in eine andere Position gebracht werden muss.

Es sind Spannklauen bekannt, die nach Art eines Hakens über das obere Ende einer im Querschnitt rechteckigen Gleitschiene greifen. Dabei kommen in einem spitzen Winkel zulaufende Innenflanken der Spannklaue an den beiden oberen, parallel zueinander verlaufenden Längskanten der Gleitschiene zur Anlage. Ein Klemmelement, das beispielsweise über eine Knebelschraube nach oben geführt wird, legt sich wiederum mit einer schräg gestellten Fläche an der unteren Innenkante der Gleitschiene an und fixiert nach Aufbringung einer Vorspannung die Spannklaue. Die Kraftübertragung von der Spannklaue zur Gleitschiene erfolgt dabei nahezu ausschließlich über die Kanten der Gleitschiene. Somit ergeben sich in Abhängigkeit der Ausprägung der Kantenverrundung unterschiedliche und vor allem hohe Flächenpressungen, die das Lastaufnahmevermögen der Spannklaue stark limitieren. Auch erscheint die Verbindung zwischen Spannklaue und Gleitschiene weich und nachgiebig, da die hohe Lastkonzentration zu lokalen Verformungen der Kanten führen kann. Des Weiteren addieren sich in der Diagonalen des Rechteckquerschnittes die Toleranzen der Abstandsmaße sowie der Kantenverrundungen. Diese Toleranzen müssen durch das Klemmelement kompensiert werden können.

WO2006110721 offenbart eine Spannklaue mit allen technischen Merkmalen des Oberbegriffs des Anspruchs 1. Aufgabe der Erfindung ist es, eine Spannklaue anzugeben, die an rechteckigen Gleitschienen mit unterschiedlichen Abmessungen einfach und sicher in einer vorbestimmten Orientierung anbringbar ist.
Die Erfindung löst diese Aufgabe durch die Spannklaue mit den Merkmalen des Anspruchs 1. Vorteilhafte Weiterbildungen sind in den Unteransprüchen angegeben. Die Erfindung sieht vor, dass das erste Anlageelement um eine zur Längsachse der Gleitschiene parallele erste Schwenkachse, die relativ zu dem Grundkörper ortsfest ist, schwenkbar gelagert ist. Das zweite Anlageelement ist um eine zu der ersten Schwenkachse parallele zweite Schwenkachse, die relativ zu dem Grundkörper beweglich ist, schwenkbar gelagert. Das Betätigungsorgan ist mit dem zweiten Anlageelement wirkverbunden. Wird das Betätigungsorgan betätigt, um das zweite Anlageelement zur Anlage an die Gleitschiene zu bewegen, so kann das zweite Anlageelement zur erforderlichen Ausrichtung um die zweite Schwenkachse verschwenkt werden. Zugleich wird das erste Anlageelement um die erste Schwenkachse geschwenkt und so in Anlage an die Gleitschiene gebracht.

Die beiden erfindungsgemäßen Anlageelemente bilden mit den beiden Schwenkachsen, von denen die erste Schwenkachse bezogen auf den Grundkörper der Spannklaue ortsfest und die zweite Schwenkachse beweglich angeordnet ist, eine Klemmstruktur, die sich beim Anbringen an der Gleitschiene selbsttätig an den Schienenflächen ausrichtet. Abmessungstoleranzen für die Höhe der Gleitschiene und die Ausbildung der Kanten haben somit keinen Einfluss mehr auf die Ausrichtung der mitsamt dem Zubehörteil an der Gleitschiene angebrachten Spannklaue. Eine feste Ausrichtung der Spannklaue relativ zur Gleitschiene wird insbesondere auch dadurch begünstigt, dass beim Anbringen der Spannklaue zunächst die Anlagefläche des Grundkörpers an die Gleitschiene angelegt wird, wodurch die Ausrichtung der Spannklaue festgelegt ist. Anschließend werden die beiden Anlageelemente an die Gleitschiene angelegt und durch Betätigen des Betätigungsorgans an den Schienenflächen festgezogen. Die Bewegung des zweiten Anlageelements ist dabei mit der Schwenkbewegung derart gekoppelt, dass die gewünschte selbsttätige Ausrichtung an der Gleitschiene ermöglicht wird.

An dieser Stelle ist darauf hinzuweisen, dass die Schwenkbewegung des ersten Anlageelementes um die erste Schwenkachse als eine Abmessungstoleranzen ausgleichende Bewegung zu verstehen ist. Demgemäß ist der Schwenkwinkel, um den das erste Anlageelement zum Toleranzausgleich verschwenkt wird, vergleichsweise klein, z.B. in einem Bereich von einigen Grad.

Vorzugsweise weist die Klemmstruktur eine mit dem Betätigungsorgan gekoppelte und gemeinsam mit dem ersten Anlageelement um die erste Schwenkachse verschwenkbare Exzenterwelle mit mindestens einem Wellenabschnitt und einem Exzenter auf. Die Exzenterwelle hat mindestens einen um eine Drehachse der Exzenterwelle drehbaren Wellenabschnitt und einen exzentrisch zu der Drehachse der Exzenterwelle ausgebildeten Exzenter. Dabei ist die zweite Schwenkachse relativ zu dem Exzenter ortsfest und das zweite Anlageelement an dem Exzenter schwenkbar gelagert. Über die genannte Exzenterwelle ist das zweite Anlageelement mit dem ersten Anlageelement gekoppelt, so dass die beiden Anlageelemente mit Betätigen des Betätigungsorgans gleichzeitig jeweils eine Schwenkbewegung ausführen. Die Schwenkbewegung des zweiten Anlageelements ist dabei eine kombinierte Bewegung, die aus einer Verschwenkung des Exzenters und einer Verschwenkung des zweiten Anlageelements um den Exzenter, resultiert. Dabei wird die Verschwenkung des Exzenters und die daraus resultierende (Schwenk-)Bewegung des an dem Exzenter gelagerten zweiten Anlageelements direkt durch die Betätigung des Betätigungsorgans bewirkt. Die zusätzliche Verschwenkung des zweiten Anlageelements um die zweite Schwenkachse ergibt sich aus dem Kontakt des bewegten zweiten Anlageelements mit der Gleitschiene. Vorzugsweise ist die zweite Schwenkachse eine Längsachse des Exzenters. Das erste Anlageelement wird um die relativ zu dem Grundkörper ortsfeste erste Schwenkachse verschwenkt. Diese Schwenkbewegung wird durch die über die Exzenterwelle vermittelte Ankopplung an das erste Anlageelement auch auf das zweite Anlageelement übertragen.

Durch das Vorsehen zweier verschwenkbarer Anlageelemente kann die Spannklaue somit an rechteckigen Gleitschienen unterschiedlicher Abmessungen angebracht und der Aufbau der Spannklaue einfach und kompakt gehalten werden. Zum Anbringen der Spannklaue an die Gleitschiene wird zunächst die Anlagefläche des Grundkörpers an die Gleitschiene angelegt, wodurch die Orientierung der Spannklaue an der Gleitschiene festgelegt ist. Nach dem Anlegen der Anlagefläche des Grundkörpers an die Gleitschiene werden die Anlageelemente an die Gleitschiene angelegt und fixieren die Spannklaue an derselben. Das zweite Anlageelement ist dabei über die Exzenterwelle mit dem ersten Anlageelement wirkverbunden, so dass beide Anlageelemente gleichzeitig jeweils eine Schwenkbewegung ausführen können. Dazu wird das zweite Anlageelement bei einer Betätigung des Betätigungsorgans durch eine Verschwenkung des Exzenters um die Drehachse der Exzenterwelle bewegt und durch den Kontakt des zweiten Anlageelements mit der Gleitschiene um die zweite Schwenkachse verschwenkt.

Vorzugsweise liegt die Anlagefläche des Grundkörpers in dem verriegelten Zustand der Klemmstruktur an einer ersten Seite der Gleitschiene an. Des Weiteren liegt in dem verriegelten Zustand der Klemmstruktur eine Anlagefläche des ersten Anlageelements an einer zweiten Seite der Gleitschiene und eine Anlagefläche des zweiten Anlageelements an einer dritten Seite der Gleitschiene an. Weiterhin liegt eine weitere Anlagefläche des Grundkörpers in dem verriegelten Zustand der Klemmstruktur an einer vierten Seite der Gleitschiene an. Auf diese Weise wird die Gleitschiene an vier Seiten von der Spannklaue umgriffen und somit die Spannklaue besonders sicher an der Gleitschiene befestigt. Zudem liegt die Spannklaue schon beim Anlegen des Grundkörpers an die Gleitschiene stabil an dieser an. Vorzugsweise ist die erste Seite die obere Seite, die zweite Seite die von dem Operationstisch abgewandte äußere Seite, die dritte Seite die untere Seite der Gleitschiene und die vierte Seite die dem Operationstisch zugewandte innere Seite der Gleitschiene.

Vorzugsweise liegt eine weitere Anlagefläche des zweiten Anlageelements in dem verriegelten Zustand der Klemmstruktur an der vierten Seite der Gleitschiene an. Dadurch kann ein Lösen der Spannklaue bei hohen auf die Spannklaue einwirkenden externen Kräften vermieden werden und somit der Halt der Spannklaue an der Gleitschiene verbessert werden.

In einer vorteilhaften Ausgestaltung ist der mindestens eine Wellenabschnitt der Exzenterwelle an dem ersten Anlageelement um die Drehachse der Exzenterwelle drehbar gelagert. Des Weiteren kann die Exzenterwelle durch Betätigen des Betätigungsorgans zum Verriegeln der Klemmstruktur um ihre Drehachse gedreht werden und der Exzenter bei dem Drehen der Exzenterwelle um deren Drehachse verschwenkt werden. Dadurch wird auf besonders einfache Weise eine Kopplung der Exzenterwelle mit dem zweiten Anlageelement und damit eine Wirkverbindung des zweiten Anlageelements mit dem ersten Anlageelement realisiert. Bei einer Verschwenkung des Exzenters wird das zweite Anlageelement zusammen mit dem Exzenter bewegt und dadurch an die Gleitschiene angelegt. Ferner behält die zum Kontakt an der Gleitschiene vorgesehene Anlagefläche des zweiten Anlageelements beim Verschwenken des zweiten Anlageelements durch die zur Längsachse der Gleitschiene parallele Ausrichtung der Schwenkachse die Orientierung zur Gleitschiene bei. Dadurch kontaktiert das zweite Anlageelement die Gleitschiene an seiner dazu bestimmten Anlagefläche, wodurch eine sichere Anlage gewährleistet ist.

Vorzugsweise hat das zweite Anlageelement ein Durchgangsloch, durch das der Exzenter geführt ist. Weiterhin hat der mindestens eine Wellenabschnitt einen ersten Wellenabschnitt und einen zweiten Wellenabschnitt. Dabei ist der Exzenter zwischen dem ersten Wellenabschnitt und dem zweiten Wellenabschnitt angeordnet. Dadurch ist auf einfache Weise eine stabile Lagerung der Exzenterwelle an dem ersten Anlageelement und an dem zweiten Anlageelement gewährleistet.

Ferner ist es vorteilhaft, wenn der erste Wellenabschnitt, der zweite Wellenabschnitt und der Exzenter zylinderförmig sind. Der erste Wellenabschnitt und der zweite Wellenabschnitt haben dabei eine gemeinsame die Drehachse der Exzenterwelle bildende Längsachse. Weiterhin ist der Exzenter derart relativ zu den Wellenabschnitten angeordnet, dass die Längsachse des Exzenters in einem Abstand parallel zu der Längsachse der Wellenabschnitte angeordnet ist. Durch das parallele Versetzen der Längsachse des Exzenters zu der Längsachse der Wellenabschnitte kann die Längsachse des Exzenters und damit das zweite Anlageelement einfach um die Längsachse der Wellenabschnitte verschwenkt werden. Zusätzlich ist dadurch das zweite Anlageelement einfach um die Längsachse des Exzenters verschwenkbar.

Vorzugsweise hat das erste Anlageelement einen ersten Schenkel und einen zweiten Schenkel. Dabei ist das zweite Anlageelement zwischen dem ersten Schenkel und dem zweiten Schenkel des ersten Anlageelements angeordnet. Weiterhin hat der erste Schenkel eine erste Öffnung und der zweite Schenkel eine zweite Öffnung, wobei der erste Wellenabschnitt durch die erste Öffnung und der zweite Wellenabschnitt durch die zweite Öffnung geführt sind. Dadurch wird die Spannklaue sehr kompakt und stabil. Zudem wird verhindert, dass die Gleitschiene längs ihrer Längsachse ungleichmäßig mit Kräften beaufschlagt wird.

In einer vorteilhaften Ausgestaltung der vorstehend erläuterten Ausführungsform haben der erste Schenkel und der zweite Schenkel jeweils eine kreisförmige Öffnung, durch die jeweils ein an dem Grundkörper ausgebildeter Bolzen geführt ist. Das erste Anlageelement ist dabei an dem die erste Schwenkachse definierenden Bolzen, drehbar gelagert. Dabei ist der Abstand der Bolzen von der Gleitschiene jeweils größer als der Abstand des die zweite Schwenkachse definierenden Exzenters von der Gleitschiene. Wird das zweite Anlageelement an die dritte (untere) Seite der Gleitschiene angeschwenkt, so übt es eine Kraft auf die Exzenterwelle und damit auf das erste Anlageelement aus. Dadurch wird das erste Anlageelement an die zweite (äußere) Seite der Gleitschiene gedrückt. Je größer die Differenz der Abstände der durch die Bolzen definierten ersten Schwenkachse und der durch den Exzenter definierten zweiten Schwenkachse jeweils von der Gleitschiene ist, desto stärker wird das erste Anlageelement durch die Kraft, die beim Bewegen des zweiten Anlageelements an die Gleitschiene auf die Exzenterwelle übertragen wird, gegen die Gleitschiene gedrückt. Im verriegelten Zustand ist somit der Halt der Spannklaue an der Gleitschiene verbessert.

An dieser Stelle ist darauf hinzuweisen, dass die vorstehend beschriebene Differenz der Abstände der beiden Schwenkachsen von der Gleitschiene unabhängig davon, wie die beiden Schwenkachsen konkret realisiert sind, eine besonders vorteilhafte Ausgestaltung der erfindungsgemäßen Spannklaue charakterisiert.

In einer vorteilhaften Ausgestaltung ist ein Stift mit dem Exzenter verbunden, der in eine Aussparung des zweiten Anlageelements ragt. Der Stift kann bei einer Drehung der Exzenterwelle um ihre Drehachse mit dem zweiten Anlageelement in Eingriff gebracht werden. Bei in Eingriff stehendem Stift kann das zweite Anlageelement bei einer Drehung der Exzenterwelle um die zweite Schwenkachse verschwenkt werden. Durch eine solche Verschwenkung kann das zweite Anlageelement derart bewegt werden, dass sich die Spannklaue von der Gleitschiene lösen lässt. Ferner wird durch die Betätigung der Exzenterwelle durch das Betätigungselement das Vorsehen eines weiteren Betätigungselements überflüssig und somit die Benutzerfreundlichkeit erhöht.

Ferner ist es vorteilhaft, wenn das zweite Anlageelement ein im Wesentlichen L-förmig ausgebildetes Element mit einem ersten Schenkel und einem demgegenüber längeren zweiten Schenkel ist. Die Anlagefläche des zweiten Anlageelements ist dabei an dem ersten Schenkel und das Durchgangsloch des zweiten Anlageelements in dem längeren zweiten Schenkel ausgebildet. Dadurch ist nur eine geringfügige Bewegung des zweiten Anlageelements notwendig, um das zweite Anlageelement an die Gleitschiene anzulegen oder es in die geöffnete Stellung zu bringen. Vorzugsweise weist die Klemmstruktur ein Vorspannelement auf, durch das das zweite Anlageelement vor dem Anlegen des Grundkörpers an die Gleitschiene in eine aufnahmebereite Stellung vorspannbar ist. Des Weiteren wird die Anlagefläche des zweiten Anlageelements bei an der Gleitschiene anliegendem Grundkörper von dem Vorspannelement an die Gleitschiene gedrückt, vorzugsweise an die dritte (untere) Seite. Das zweite Anlageelement nimmt also vor dem Anlegen an die Gleitschiene selbsttätig die aufnahmebereite Stellung ein, in der die Spannklaue auf einfache Weise an die Gleitschiene anlegbar ist. Beim Anlegen wird dann die Spannklaue geradlinig auf die Gleitschiene zubewegt, bis das zweite Anlageelement die Gleitschiene kontaktiert. Wird die Spannklaue auf die Gleitschiene gedrückt, so wird das zweite Anlageelement entgegen der von dem Vorspannelement ausgeübten Vorspannkraft so weit in der zweiten Schwenkrichtung verschwenkt, bis die Gleitschiene von der Spannklaue umgriffen wird. Dies ist möglich, ohne die Spannklaue gegenüber der Gleitschiene zu verkippen.

Vorzugsweise hat der Grundkörper eine zwischen der Anlagefläche und der weiteren Anlagefläche angeordnete Kantenaussparung, die die sich zwischen der ersten (oberen) Seite der Gleitschiene und der vierten (inneren) Seite der Gleitschiene befindende erste Schienenkante berührungslos aufnimmt. Dadurch wird die Gleitschiene an allen vier Seiten kontaktiert und damit sicher von der Spannklaue umgriffen. Zudem kontaktiert der Grundkörper die Gleitschiene an ihren flächig ausgebildeten Seiten und nicht an einer Schienenkante, wodurch unterschiedliche Verrundungen an der Schienenkante den Halt der Spannklaue an der Gleitschiene nicht nachteilig beeinflussen.

Ferner ist es vorteilhaft, wenn das zweite Anlageelement in einem Kantenbereich der Gleitschiene angreift, in dem sich die zwischen der dritten (unteren) Seite der Gleitschiene und der vierten (inneren) Seite der Gleitschiene angeordnete zweite Schienenkante befindet. Das zweite Anlageelement hat dabei eine Kantenaussparung, die die zweite Schienenkante berührungslos aufnimmt. Dadurch kontaktiert auch das zweite Anlageelement die Gleitschiene lediglich an ihren flächig ausgebildeten Seiten.

In einer vorteilhaften Ausgestaltung der erfindungsgemäßen Spannklaue ist das Betätigungsorgan ein fest mit der Exzenterwelle verbundener und mit der Exzenterwelle um ihre Drehachse schwenkbarer Betätigungshebel. Dabei ist der Betätigungshebel in dem verriegelten Zustand der Klemmstruktur über ein Rastgesperre arretierbar. Durch die Ausbildung des Betätigungsorgans als Hebel können hohe Kräfte auf die Anlageelemente übertragen werden, womit ein sicherer Halt der Spannklaue an der Gleitschiene gewährleistet wird. Ebenso können durch die Arretierung des Betätigungshebels mittels des Rastgesperres hohe Haltekräfte im verriegelten Zustand erreicht werden. Vorzugsweise ist das Rastgesperre derart ausgeführt, dass der Betätigungshebel durch die Arretierung lediglich entgegen der Betätigungsrichtung festgesetzt wird. Dadurch ist zum einen gewährleistet, dass sich die verriegelte Spannklaue nicht von der Gleitschiene löst. Zum anderen ist der Benutzer nicht daran gehindert, die Klemmstruktur noch stärker an der Gleitschiene festzuziehen, indem er den Betätigungshebel weiter in Betätigungsrichtung drückt. Alternativ kann die Arretierung direkt an der Exzenterwelle erfolgen.

Ferner ist es vorteilhaft, wenn das Rastgesperre einen mit dem ersten Anlageelement verbundenen oder mit diesem einstückig ausgeführten Rastkörper und mindestens eine mit dem Betätigungshebel verbundene Klinke umfasst. Dabei ist die Klinke mit dem Rastkörper in Verzahnungseingriff bringbar und aus dem Verzahnungseingriff wieder lösbar, wobei die Klinke bei bestehendem Verzahnungseingriff mit dem Rastkörper den Betätigungshebel arretiert. Durch die Ankopplung des Rastgesperres an das erste Anlageelement werden sowohl der Rastkörper als auch der Betätigungshebel mit dem ersten Anlageelement mitverschwenkt und behalten dadurch auch bei Schwenkbewegungen der Anlageelemente ihre Positionen relativ zueinander bei.

Die vorstehend erläuterte Ausführungsform wird vorteilhaft dadurch weitergebildet, dass eine erste Klinke und eine zweite Klinke vorgesehen sind und der Betätigungshebel ein Betätigungselement hat, wobei die erste Klinke und die zweite Klinke durch Betätigen des Betätigungselements aus dem Verzahnungseingriff lösbar sind. Dadurch wird eine sichere Arretierung des Betätigungshebels gewährleistet, wodurch die Spannklaue sicher an der Gleitschiene befestigt ist. Insbesondere können die Klinken und der Rastkörper durch diesen Freigabemechanismus so ausgebildet werden, dass die Klinken an den Zähnen des Verzahnungseingriffs sicher abgestützt sind, d.h. eine hoch belastbare Zahngeometrie gegeben ist.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert. Es zeigen:
- Fig. 1: eine perspektivische Ansicht einer an einer Gleitschiene angebrachten erfindungsgemäßen Spannklaue gemäß einer ersten Ausführungsform der Erfindung;
- Fig. 2: eine geschnittene Seitenansicht der an die Gleitschiene angebrachten Spannklaue;
- Fig. 3: eine perspektivische Ansicht eines Grundkörpers der Spannklaue;
- Fig. 4: eine perspektivische Ansicht von Elementen einer Klemmstruktur der an der Gleitschiene anliegenden Spannklaue;
- Fig. 5: eine perspektivische Ansicht einer Exzenterwelle und eines Betätigungselementes der Klemmstruktur nach Fig. 4;
- Fig. 6: eine perspektivische Darstellung der Exzenterwelle, des Betätigungselementes und eines Schwenkriegels der Klemmstruktur nach Fig. 4;
- Fig. 7: eine geschnittene Seitenansicht der Spannklaue aus der zu Fig. 2 entgegengesetzten Perspektive, wobei weitere Funktionselemente sichtbar sind;
- Fig. 8: eine perspektivische Ansicht der Spannklaue, wobei Elemente eines Rastgesperres zur Verriegelung der Spannklaue sichtbar sind;
- Fig. 9: eine Draufsicht auf Teile der Spannklaue, die die Elemente des Rastgesperres in einem unverriegelten Zustand der Klemmstruktur zeigt;
- Fig. 10: eine Seitenansicht der Spannklaue in einer aufnahmebereiten Stellung eines Schwenkriegels der Klemmstruktur vor dem Anlegen an die Gleitschiene;
- Fig. 11: eine Seitenansicht der Spannklaue in einer geöffneten Stellung des Schwenkriegels nach dem Heranführen an die Gleitschiene;
- Fig. 12: eine Seitenansicht der an die Gleitschiene angelegten Spannklaue in der aufnahmebereiten Stellung des Schwenkriegels;
- Fig. 13: eine geschnittene Seitenansicht des an der Gleitschiene anliegenden Grundkörpers der Spannklaue;
- Fig. 14: eine Seitenansicht der an die Gleitschiene angelegten Spannklaue in einer Zwischenstellung zwischen der aufnahmebereiten Stellung und einer geschlossenen Stellung des Schwenkriegels;
- Fig. 15: eine Seitenansicht der an die Gleitschiene angelegten Spannklaue in einem fixierten Zustand;
- Fig. 16: eine Seitenansicht der an die Gleitschiene angelegten Spannklaue in einem verriegelten Zustand der Klemmstruktur;
- Fig. 17: eine geschnittene Seitenansicht der an die Gleitschiene angelegten Spannklaue in dem verriegelten Zustand der Klemmstruktur;
- Fig. 18: eine geschnittene Seitenansicht der Spannklaue in einer Zwischenstellung zwischen der aufnahmebereiten Stellung und der geschlossenen Stellung des Schwenkriegels;
- Fig. 19: eine geschnittene Seitenansicht der Spannklaue in einer weiteren Zwischenstellung zwischen der aufnahmebereiten Stellung und der geschlossenen Stellung des Schwenkriegels;
- Fig. 20: eine geschnittene Seitenansicht der Spannklaue in einer Zwischenstellung zwischen der aufnahmebereiten Stellung und der geöffneten Stellung des Schwenkriegels;
- Fig. 21: eine geschnittene Seitenansicht der Spannklaue in einer geöffneten Stellung des Schwenkriegels;
- Fig.22: eine geschnittene Seitenansicht der an der Gleitschiene anliegenden Spannklaue, wobei auf die Gleitschiene wirkende Kräfte dargestellt sind;
- Fig. 23: eine perspektivische Ansicht einer erfindungsgemäßen Spannklaue gemäß einer zweiten Ausführungsform;
- Fig. 24: eine perspektivische Ansicht der Spannklaue gemäß der zweiten Ausführungsform aus einer anderen Perspektive;
- Fig. 25: eine perspektivische Ansicht eines Grundkörpers der Spannklaue gemäß der zweiten Ausführungsform;
- Fig. 26: eine perspektivische Ansicht von Elementen einer Klemmstruktur der Spannklaue gemäß der zweiten Ausführungsform;
- Fig. 27: eine perspektivische Ansicht einer weiteren Auswahl von Elementen der Klemmstruktur der Spannklaue gemäß der zweiten Ausführungsform;
- Fig. 28: eine geschnittene Seitenansicht der Spannklaue gemäß der zweiten Ausführungsform in der aufnahmebereiten Stellung eines Schwenkriegels der Spannklaue;
- Fig. 29: eine geschnittene Seitenansicht der Spannklaue gemäß der zweiten Ausführungsform in einer Zwischenstellung zwischen der aufnahmebereiten Stellung und der geschlossenen Stellung des Schwenkriegels;
- Fig. 30: eine geschnittene Seitenansicht der Spannklaue gemäß der zweiten Ausführungsform in der geschlossenen Stellung des Schwenkriegels;
- Fig. 31: eine geschnittene Seitenansicht der Spannklaue gemäß der zweiten Ausführungsform in der geöffneten Stellung des Schwenkriegels;

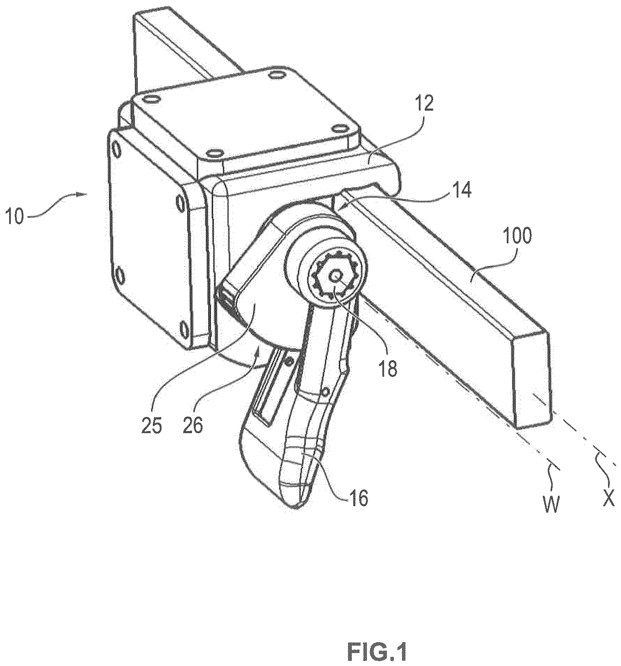

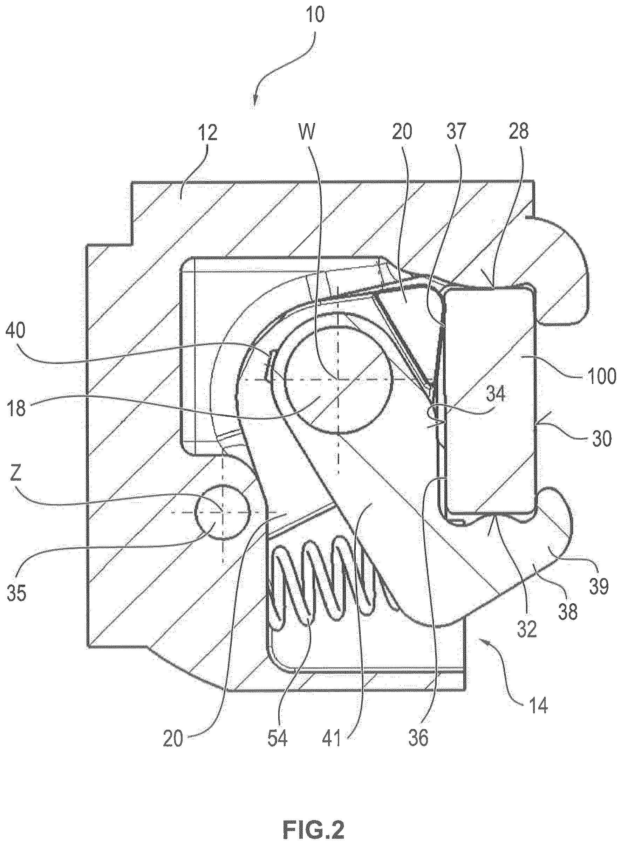

Die Figuren 1 und 2 zeigen eine perspektivische Ansicht bzw. eine geschnittene Seitenansicht einer an einer Gleitschiene 100 angebrachten erfindungsgemäßen Spannklaue 10. Die Gleitschiene 100 hat einen rechteckigen Querschnitt und wird von der Spannklaue 10 quer zu der Längsachse X der Gleitschiene 100 umgriffen. Dabei wird die Gleitschiene 100 von der Spannklaue 10 jeweils an ihrer oberen Schienenfläche 28, an einer einem nicht dargestellten Operationstisch zugewandten inneren Schienenfläche 30, an ihrer unteren Schienenfläche 32 und an ihrer äußeren Schienenfläche 34 kontaktiert und so eingeklemmt, dass die Spannklaue 10 fest an der Gleitschiene 100 angebracht ist.

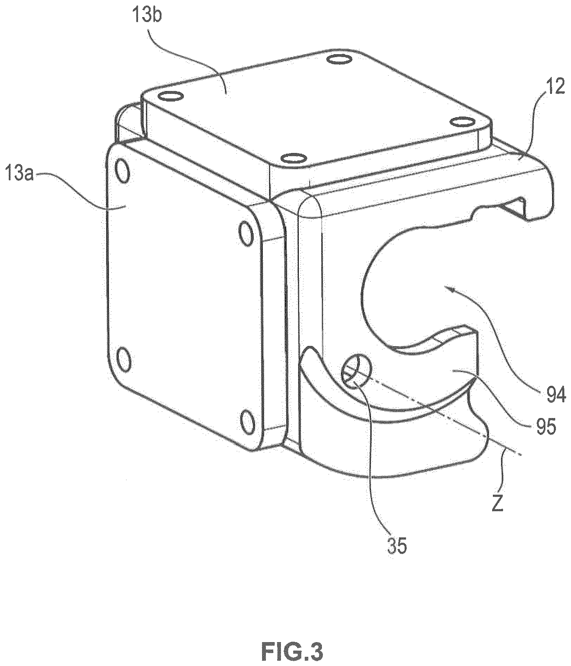

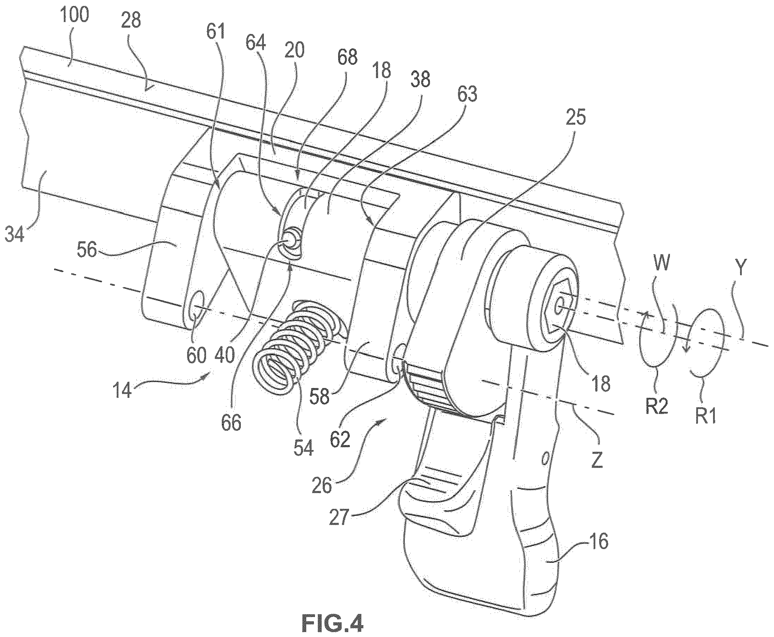

Die Spannklaue 10 hat einen in Figur 3 separat gezeigten Grundkörper 12 mit Kopplungsschnittstellen 13a und 13b zum Befestigen von nicht dargestelltem Operationstischzubehör und eine allgemein mit 14 bezeichnete Klemmstruktur, die in Figur 4 in einer perspektivischen Ansicht unter Ausblendung des Grundkörpers 12 an der Gleitschiene 100 anliegend dargestellt ist. Die Klemmstruktur 14 umfasst ein Stützelement 20, das ein erstes Anlageelement zur Anlage an der Gleitschiene 100 bildet, einen Schwenkriegel 38, der ein zweites Anlageelement zur Anlage an der Gleitschiene 100 bildet, eine Exzenterwelle 18, einen Betätigungshebel 16, ein Rastgesperre 26 und eine Schraubendruckfeder 54.

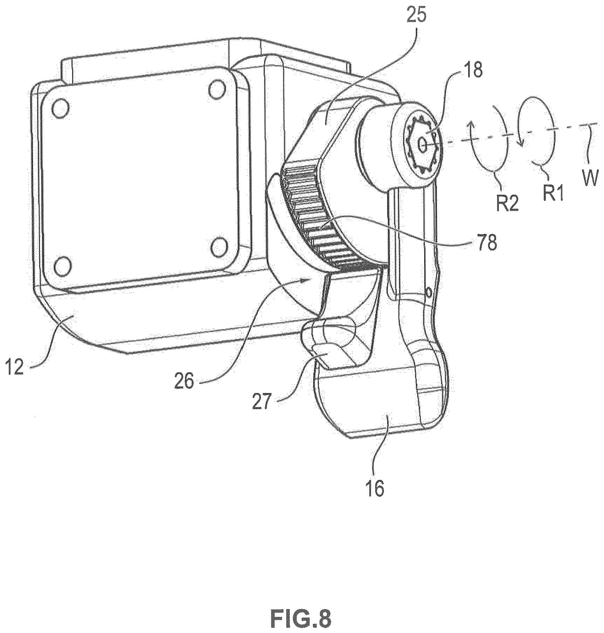

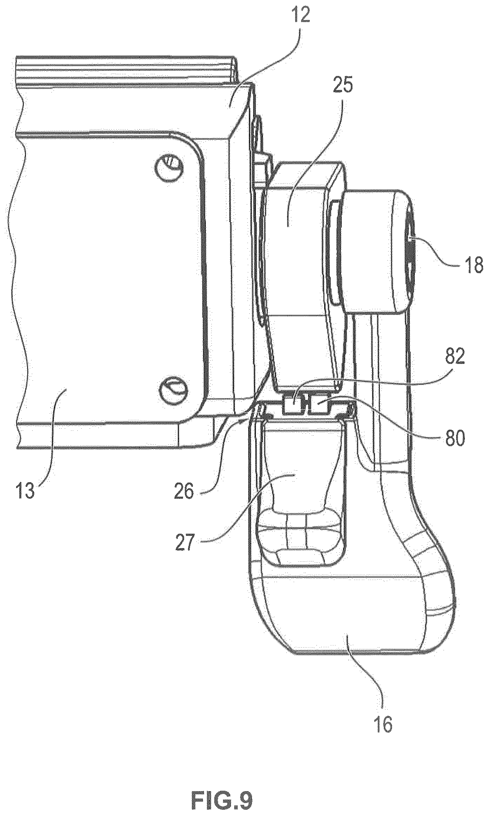

Das Stützelement 20 hat einen in Figur 4 gezeigten ersten Schenkel 56 mit einer ersten kreisförmigen Öffnung 60 und einen zweiten Schenkel 58 mit einer zweiten kreisförmigen Öffnung 62, durch die jeweils ein mit dem Grundkörper 12 verbundener, in Figur 4 nicht dargestellter Bolzen geführt ist. Die Bolzen ragen jeweils in ein Durchgangsloch 35 des Grundkörpers 12 und haben eine gemeinsame Längsachse Z, um die das Stützelement 20 an den Bolzen schwenkbar gelagert ist. Der erste Schenkel 56 und der zweite Schenkel 58 des Stützelements 20 haben ferner jeweils eine dritte kreisförmige Öffnung 61 bzw. eine vierte kreisförmige Öffnung 63. Dabei ist die vierte kreisförmige Öffnung als Durchgangsloch durch den zweiten Schenkel 58 und durch einen mit dem zweiten Schenkel 58 verbundenen Rastkörper 25 des Rastgesperres 26 ausgeführt. Der Aufbau des Rastgesperres 26 wird später Anhand der Figuren 8 und 9 näher erläutert.

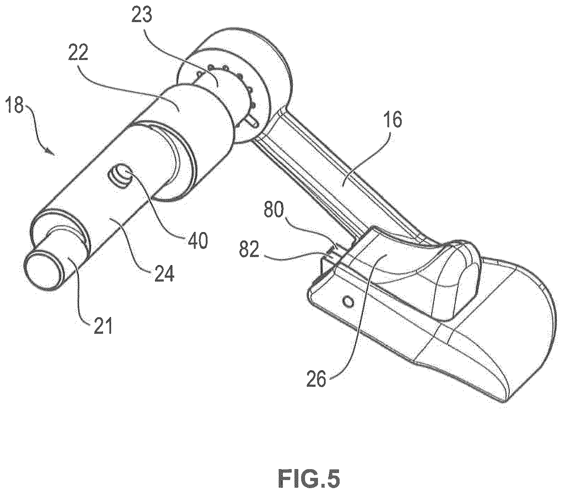

In den Öffnungen 61 und 63 des Stützelements 20 ist die in Figur 5 zusammen mit dem Betätigungshebel 16 gezeigte Exzenterwelle 18 drehbar gelagert. Die Exzenterwelle 18 hat einen ersten Wellenabschnitt 21, einen zweiten Wellenabschnitt 22, einen dritten Wellenabschnitt 23 und einen Exzenter 24. Die Wellenabschnitte 21, 22 und 23 sind zylinderförmig ausgebildet und haben eine gemeinsame Längsachse W. Zwischen dem ersten Wellenabschnitt 21 und dem zweiten Wellenabschnitt 22 ist der zylinderförmige Exzenter 24 derart angeordnet und fest mit diesen verbunden, dass die Längsachse Y des Exzenters 24 parallel versetzt zu der Längsachse W der Wellenabschnitte 21, 22 und 23 ist. Der dritte Wellenabschnitt 23 ist an einem Ende mit dem zweiten Wellenabschnitt 22 und an seinem anderen Ende mit dem Betätigungshebel 16 fest verbunden.

Ferner ist der erste Wellenabschnitt 21 durch die dritte Öffnung 61 und der zweite Wellenabschnitt 22 zusammen mit dem vierten Wellenabschnitt 23 durch die vierte Öffnung 63 geführt und jeweils an dem Stützelement 20 um die Längsachse W drehbar gelagert. Durch die drehbare Lagerung um die Längsachse W der Wellenabschnitte 21, 22 und 23 bildet diese eine Drehachse der Exzenterwelle 18, um die die Exzenterwelle 18 in einer in Figur 4 gezeigten ersten Drehrichtung R1 und in einer entgegengesetzten zweiten Drehrichtung R2 drehbar ist.

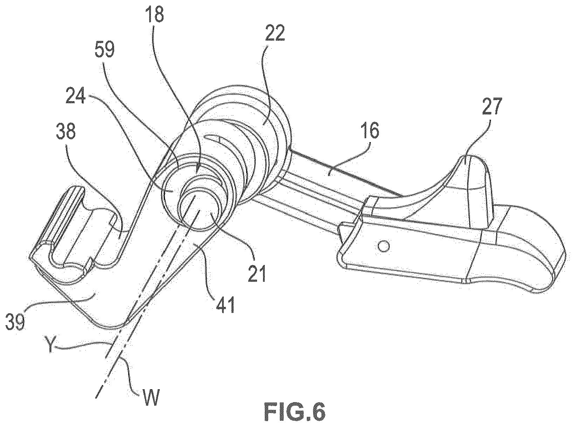

Weiterhin ist der Exzenter 24 durch ein im Querschnitt kreisförmiges, in Figur 6 gezeigtes Durchgangsloch 59 des zwischen den Schenkeln 56 und 58 des Stützelements 20 angeordneten Schwenkriegels 38 geführt. Der Schwenkriegel 38 ist dabei an dem Exzenter 24 um dessen Längsachse Y drehbar gelagert.

Der Schwenkriegel 38 ist im Wesentlichen L-förmig ausgebildet und weist einen ersten Schenkel 39 und einen demgegenüber längeren zweiten Schenkel 41 auf. In Figur 2 umgreift der erste Schenkel 39 die Gleitschiene 100 von unten her. Durch das obere Ende des zweiten Schenkels 41 ist die Exzenterwelle 18 geführt.

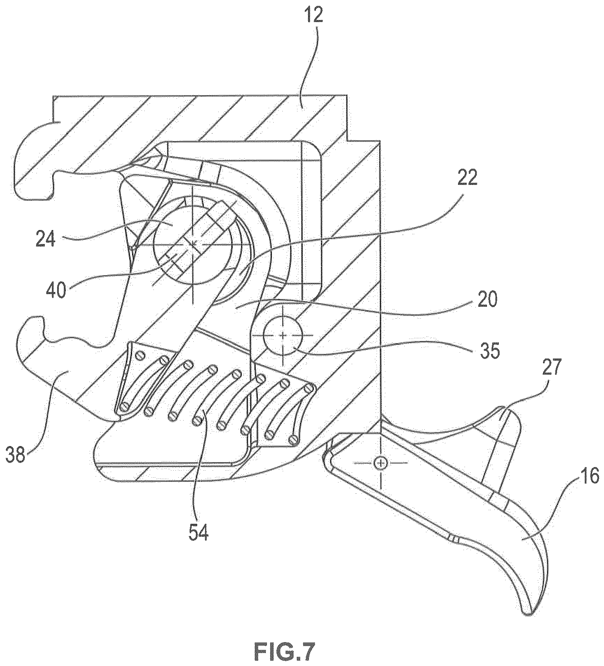

Ferner hat die Exzenterwelle 18 einen in Figur 4 gezeigten Stift 40, der durch ein Langloch 64 des Schwenkriegels 38 geführt ist. Der Schwenkriegel 38 hat einen ersten Anschlag 66, der durch das in Figur 4 untere Ende des Langlochs 64 gebildet ist, und einen zweiten Anschlag 68, der durch das in Figur 3 obere Ende des Langlochs 64 gebildet ist, mit denen der Stift 40 jeweils durch eine Drehung der Exzenterwelle 18 um ihre Längsachse Y in einer ersten Drehrichtung R1 bzw. einer hierzu entgegengesetzten zweiten Drehrichtung R2 in Anschlag gebracht werden kann. In Figur 7 ist der Stift 40 in einer mittleren Position zwischen dem ersten Anschlag 66 und dem zweiten Anschlag 68 in einem durch den Stift 40 verlaufenden Querschnitt der Spannklaue 10 gezeigt.

Weiterhin hat der Schwenkriegel 38 eine Aussparung und der Grundkörper 12 eine Aussparung, in denen die Schraubendruckfeder 54 jeweils den Schwenkriegel 38 und den Grundkörper 12 kontaktiert. Dabei beaufschlagt die Schraubendruckfeder 54 den Schwenkriegel 38 an seiner in den Figuren 2 und 7 unteren Seite mit einer Federkraft und spannt diesen so zur Gleitschiene 100 vor. Dadurch befindet sich der Schwenkriegel 38 in einer vorgespannten Schwenkposition relativ zu dem Stützelement 20.

An der von dem Schwenkriegel 38 abgewandten Seite des Stützelements 20 ist die Exzenterwelle 18 aus dem Rastkörper 25 herausgeführt und an ihrem Ende mit einem Betätigungshebel 16 fest verbunden. Dabei ist der Betätigungshebel 16 mit der Exzenterwelle 18 um deren Drehachse W drehbar. Ferner ist an dem Betätigungshebel 16 ein Betätigungselement 27 des Rastgesperres 26 angebracht.

Figur 8 zeigt eine perspektivische Ansicht der Spannklaue 10, wobei Elemente des Rastgesperres 26 zur Verriegelung der Spannklaue 10 sichtbar sind. In Figur 9 ist eine Draufsicht auf Teile der Spannklaue 10 gezeigt, die die Elemente des Rastgesperres 26 in einem unverriegelten Zustand der Klemmstruktur 14 zeigt. Das Rastgesperre 26 umfasst, wie schon erwähnt, den Rastkörper 25 und das Betätigungselement 27 sowie eine erste Klinke 80 und eine zweite Klinke 82, die auch in Figur 5 dargestellt sind. Zudem ist an dem Rastkörper 25 eine Sägeverzahnung 78 ausgebildet.

In der in Figur 8 gezeigten Stellung des Betätigungshebels 16 greifen die erste Klinke 80 und die zweite Klinke 82 in die Sägeverzahnung 78 des Rastkörpers 25 ein und arretieren den Betätigungshebel 16, der damit gegen eine Drehung in der zweiten Drehrichtung R2 gesichert ist. Die erste Klinke 80 und die zweite Klinke 82 können durch Drücken des Betätigungselements 27 aus der Sägeverzahnung 78 gelöst werden, wodurch der Betätigungshebel 16 wieder freigegeben wird. Dabei wirkt das Betätigungselement 27 auf eine in dem Betätigungshebel 16 enthaltene Mechanik, mit der die Klinken 80 und 82 in den Betätigungshebel 16 gezogen werden. Der Betätigungshebel 16 kann bei gedrücktem Betätigungselement 27 in der zweiten Drehrichtung R2 um die Drehachse W der Exzenterwelle 18 gedreht werden. Dabei zeigt Figur 9 die Stellung des Betätigungshebels 16 nach einer Drehung in den unverriegelten Zustand der Klemmstruktur 14.

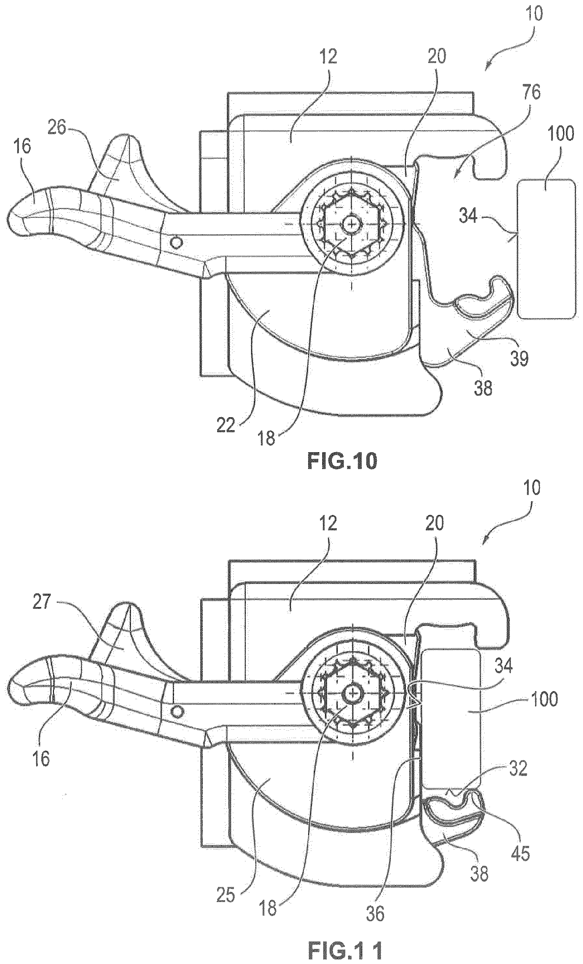

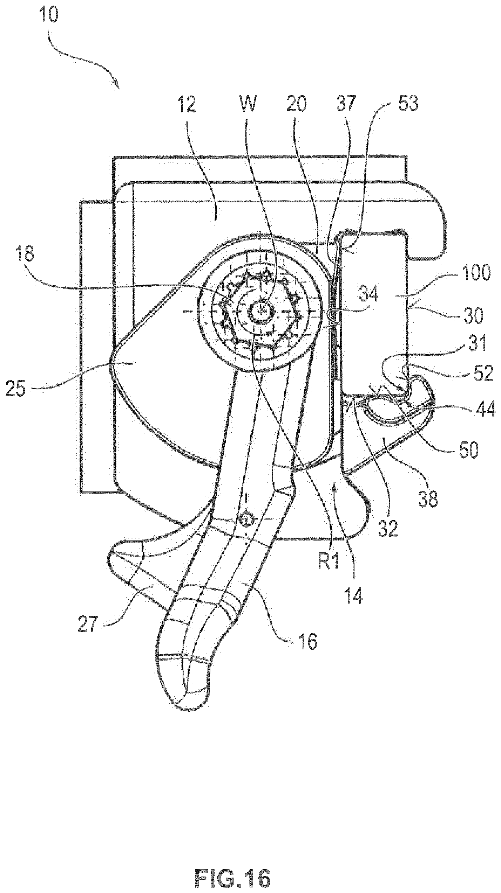

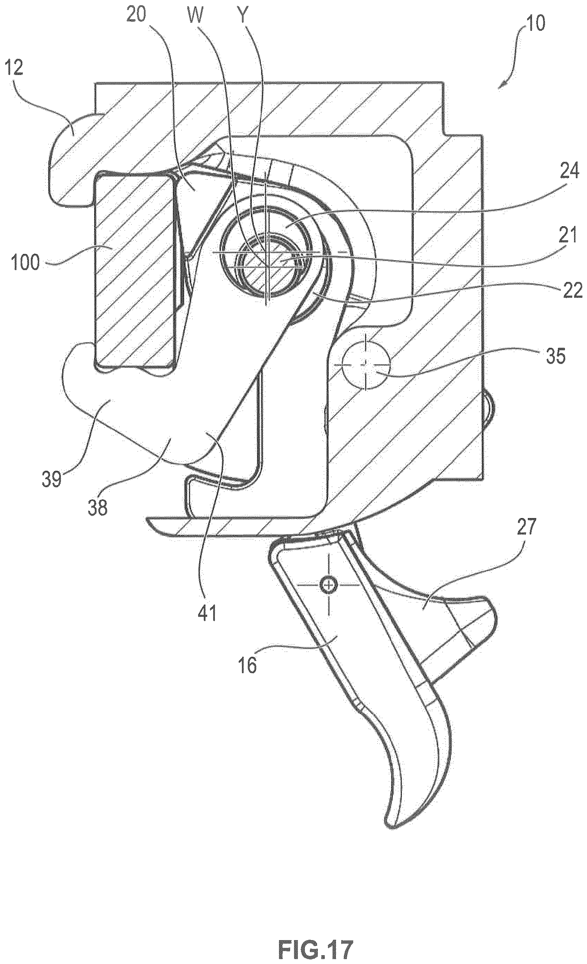

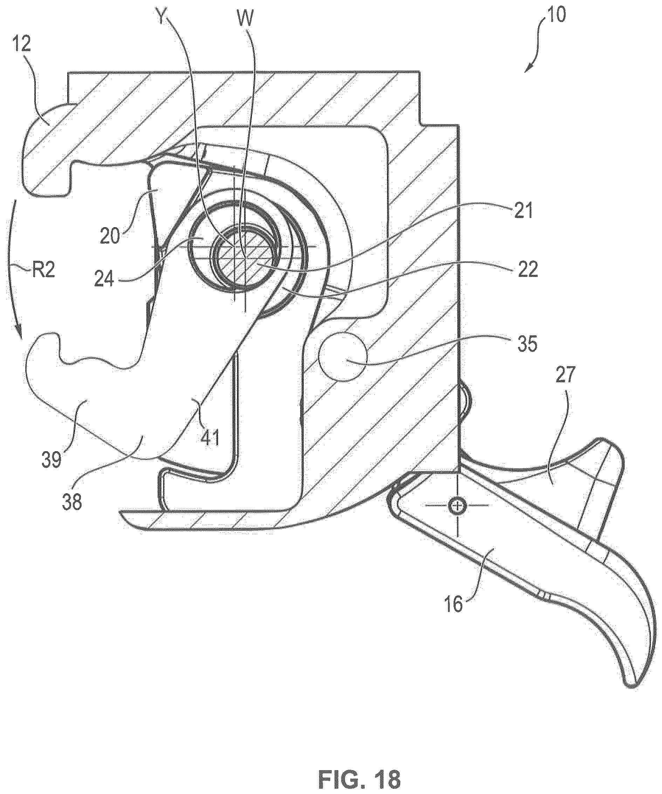

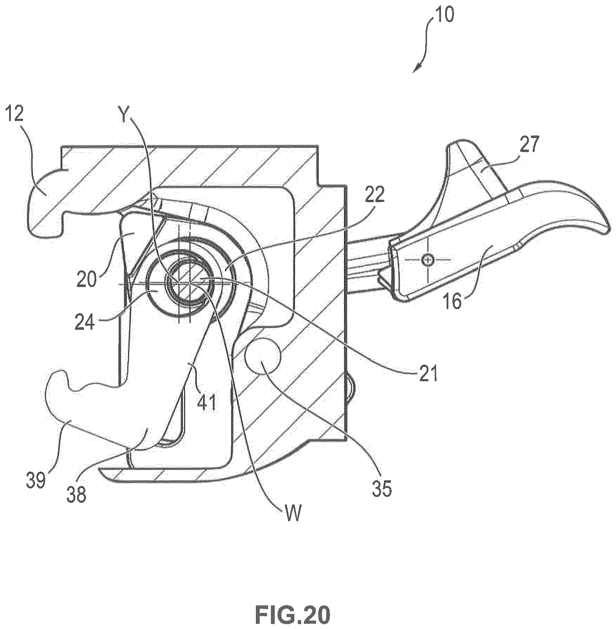

Die Figuren 10 bis 16 zeigen jeweils eine Seitenansicht der Spannklaue 10 in verschiedenen Phasen beim Anlegen der Spannklaue 10 an die Gleitschiene 100. Ferner zeigen die Figuren 17 bis 21 jeweils einen Querschnitt der Spannklaue 10 aus der zu den Figuren 10 bis 16 entgegengesetzten Perspektive in verschiedenen Phasen beim Lösen der Spannklaue 10 von der Gleitschiene 100. Die in den Figuren 17, 18 und 19 gezeigten Phasen weisen dabei jeweils eine ähnliche Stellung des Betätigungshebels auf wie die beim Anlegen gezeigten Phasen in den Figuren 16, 15 und 14. In den Figuren 18 bis 21 ist die Gleitschiene 100 ausgeblendet.

In Figur 10 ist der Schwenkriegel 38 in einer aufnahmebereiten Stellung vor dem Anlegen an die Gleitschiene 100 gezeigt. Vor dem Anlegen an die Gleitschiene 100 ist der Schwenkriegel 38 durch die in Figur 10 nicht gezeigte Schraubendruckfeder 54 so vorgespannt, dass der erste Schenkel 39 des Schwenkriegels 38 in einer gegenüber der Horizontalen nach oben geneigten Schwenkstellung ist. Ferner ist der Betätigungshebel 16 in der aufnahmebereiten Stellung des Schwenkriegels 38 im Wesentlichen horizontal ausgerichtet.

Zum Anlegen der Spannklaue 10 an die Gleitschiene 100 wird die Spannklaue 10 horizontal in der in Figur 10 gezeigten Ausrichtung auf die Gleitschiene 100 zubewegt, so dass der Schwenkriegel 38 die äußere Schienenfläche 34 kontaktiert. Dadurch weicht der Schwenkriegel 38 zurück, d.h. er wird entgegen der von der Schraubendruckfeder 54 ausgeübten Vorspannkraft um die Schwenkachse Y (vgl. Figur 4) in den Grundkörper 12 eingeschwenkt und gibt somit den Raum für die Aufnahme der Gleitschiene 100 frei.

Figur 11 zeigt eine Seitenansicht der Spannklaue 10 in einer geöffneten Stellung des Schwenkriegels 38, nachdem die Spannklaue 100 an die Gleitschiene 100 herangeführt worden ist. Die Gleitschiene 100 wird in einem unteren Bereich 36 der äußeren Schienenfläche 34 von dem Grundkörper 12 und an der unteren Schienenfläche 32 von einem Bereich 45 des Schwenkriegels 38 kontaktiert. Beim Verschwenken des Schwenkriegels 38 in die geöffnete Stellung nach Figur 11 behält der Betätigungshebel 16 seine im Wesentlichen horizontale Ausrichtung bei, da die Schwenkbewegung des Schwenkriegels 38 nicht auf den Betätigungshebel 16 übertragen wird. Bei dieser Schwenkbewegung werden nämlich das in Figur 4 gezeigte, in dem Schwenkriegel 38 ausgebildete Langloch 64 und der darin angeordnete, auf dem Exzenter 24 ausgebildete Stift 40 relativ zueinander bewegt, ohne dass der Stift 40 in Kontakt mit einem der Anschläge 66, 68 des Langlochs 64 kommt. In diesem Zustand bleibt die mit dem Betätigungshebel 16 fest verbundene Exzenterwelle 18 von der Schwenkbewegung des Schwenkriegels 38 unbeeinflusst.

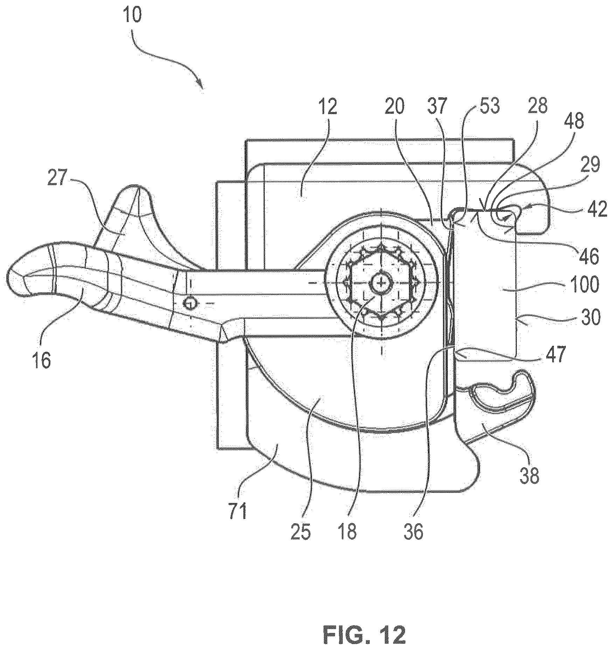

In der Seitenansicht nach Figur 12 ist die Spannklaue 10 relativ zu ihrer Position in Figur 11 vertikal nach unten bewegt, so dass eine konvex geformte erste Anlagefläche 46 des Grundkörpers 12 auf der oberen Schienenfläche 28 aufliegt und eine zweite Anlagefläche 48 des Grundkörpers 12 an der inneren Schienenfläche 30 anliegt. Die erste Schienenkante 29, die sich zwischen der oberen Schienenfläche 28 und der inneren Schienenfläche 30 befindet, ist in einer Kantenaussparung 42 des Grundkörpers 12 berührungslos aufgenommen. In dem unteren Bereich 36 der äußeren Schienenfläche 34 liegt eine dritte Anlagefläche 47 einer in Figur 12 vorderen Seitenwand 71 des Grundkörpers 12 an. Ferner liegt in dem oberen Bereich 37 der äußeren Schienenfläche 34 eine Anlagefläche 53 des Stützelements 20 an, die in einem von der Schwenkachse Z abgewandten Bereich des Stützelements 20 angeordnet ist (vgl. Figur 4).

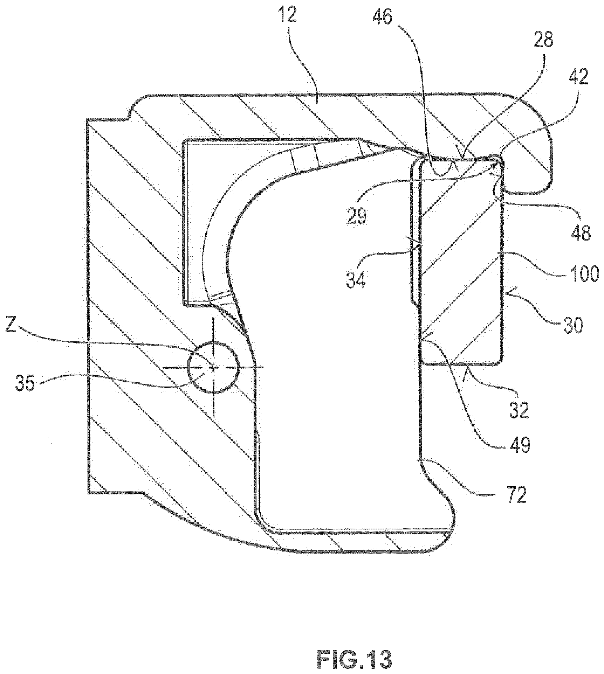

In der in Figur 13 gezeigten geschnittenen Seitenansicht des an der Gleitschiene 100 anliegenden Grundkörpers 12 der Spannklaue 10 sind die Anlageflächen des Grundkörpers 12 an der Gleitschiene 100 veranschaulicht. Neben den in Figur 12 dargestellten Anlageflächen 46, 48 und der Anlagefläche 47 der vorderen Seitenwand 71 hat der Grundkörper 12 eine vierte Anlagefläche 49, die an einer in Figur 13 sichtbaren hinteren Seitenwand 72 ausgebildet ist und an dem unteren Bereich 36 der äußeren Schienenfläche 34 anliegt.

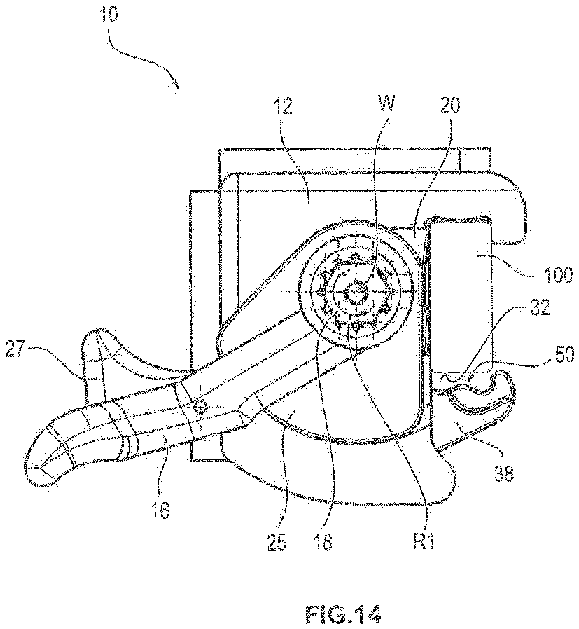

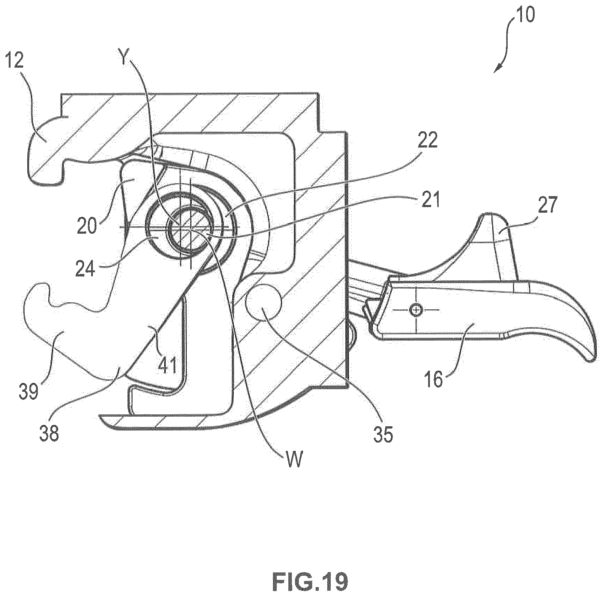

Ausgehend von dem in den Figuren 12 und 13 dargestellten Zustand wird der Betätigungshebel 16 nach unten geschwenkt. Mit dieser Schwenkbewegung des Betätigungshebels 16 wird der Exzenter 24 um die Drehachse W der Exzenterwelle 18 in der ersten Drehrichtung R1 verschwenkt. Der dadurch erreichte Zustand ist in den Figuren 14 und 19 dargestellt. Der Schwenkriegel 38 wird durch das Verschwenken des Exzenters 24 in der ersten Drehrichtung R1 in Figur 14 im Wesentlichen nach oben bewegt, wodurch sich eine konvex geformte Anlagefläche 50 des Schwenkriegels 38 der unteren Schienenfläche 32 angenähert hat. In dem erreichten Zustand befindet sich der Schwenkriegel 38 in einer Zwischenstellung zwischen der aufnahmebereiten Stellung und einer geschlossenen Stellung, die in Figur 16 gezeigt ist und später erläutert wird. Weiterhin sind die Klinken 80 und 82 in dieser Position des Betätigungshebels 16 mit der Verzahnung des Rastkörpers 25 in Eingriff.

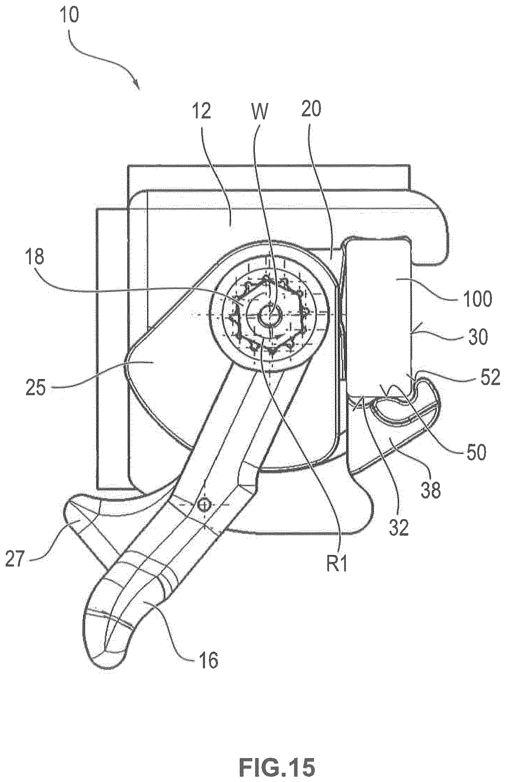

In Figur 15 ist eine Seitenansicht der an die Gleitschiene 100 angelegten Spannklaue 10 in einem fixierten Zustand gezeigt. Der Betätigungshebel 16 wurde dabei relativ zu seiner Stellung in Figur 14 weiter um die Drehachse W in der ersten Drehrichtung R1 verschwenkt, bis der Exzenter 24 so weit um die Drehachse W der Exzenterwelle 18 verschwenkt ist, dass die erste Anlagefläche 50 des Schwenkriegels 38 an der unteren Schienenfläche 32 anliegt. Eine ebenfalls konvex geformte zweite Anlagefläche 52 des Schwenkriegels 38 ist in diesem Zustand in einem Abstand gegenüber der inneren Schienenfläche 30 angeordnet und sichert dadurch die Spannklaue 10 gegen ein Lösen von der Gleitschiene 100.

Ferner greifen die Klinken 80 und 82 in die Sägeverzahnung 78 ein und arretieren den Betätigungshebel 16 gegen eine Drehung in der zweiten Drehrichtung R2. Dadurch werden eine Rückbewegung des Schwenkriegels 38 und damit ein Öffnen der Spannklaue 10 verhindert.

In Figur 16 ist eine Seitenansicht der an die Gleitschiene 100 angelegten Spannklaue 10 in dem verriegelten Zustand der Klemmstruktur 14 gezeigt. In diesem Zustand ist der Exzenter 24 durch eine weitere Verschwenkung des Betätigungshebels 16 relativ zu der Stellung in Figur 15 weiter um die Drehachse W in der ersten Drehrichtung R1 verschwenkt, so dass der erste Schenkel 39 des Schwenkriegels 38 so weit in Richtung der Gleitschiene 100 bewegt ist, dass die Anlagefläche 52 des Schwenkriegels 38 an der inneren Schienenfläche 30 anliegt. Eine zweite Schienenkante 31, die sich zwischen der inneren Schienenfläche 30 und der unteren Schienenfläche 32 befindet, ist in einer Kantenaussparung 44 des Schwenkriegels 38 berührungslos aufgenommen. Der Schwenkriegel 38 ist damit in der geschlossenen Stellung.

Ferner stehen in der geschlossenen Stellung des Schwenkriegels 38 die erste Klinke 80 und die zweite Klinke 82 mit der Sägeverzahnung 78 in Eingriff, wodurch sich die Klemmstruktur 14 in dem verriegelten Zustand befindet, in dem der Betätigungshebel 16 arretiert und die Spannklaue 10 sicher an der Gleitschiene 100 befestigt ist. Die Spannklaue 10 eignet sich zur Befestigung an Gleitschienen mit unterschiedlichen Abmessungen. So kann zusätzlich zu dem Schwenkriegel 38 auch das Stützelement 20 an die Gleitschiene 100 angeschwenkt werden, bis seine Kontaktfläche 53 an dem oberen Bereich 37 der Gleitschiene 100 anliegt. Falls eine Verschwenkung des Stützelements 20 infolge der Schienenabmessung erforderlich ist, wird dieses nach dem Anschwenken der ersten Kontaktfläche 50 des Schwenkriegels 38 an die untere Schienenfläche 32 an die äußere Schienenfläche 34 angeschwenkt. Dazu wird die Exzenterwelle 18 durch eine fortgesetzte Verschwenkung des Betätigungshebels 16 in der ersten Drehrichtung R1 bei an der unteren Schienenfläche 32 anliegender Kontaktfläche 50 des Schwenkriegels 38 in Figur 2 nach unten bewegt und damit das Stützelement 20 um die Schwenkachse Z in Richtung der Gleitschiene 100 verschwenkt. Ferner kann bei Befestigung der Spannklaue 10 an einer entsprechend ausgestalteten Gleitschiene die geschlossene Stellung des Schwenkriegels 38 in von Figur 16 abweichenden Stellungen erreicht werden. Beispielsweise kann der Schwenkriegel 38 in der in Figur 18 gezeigten Stellung in der geschlossenen Stellung sein und die Klemmstruktur 14 in dem verriegelten Zustand.

Das Lösen der Spannklaue 10 von der Gleitschiene 100 erfolgt im Wesentlichen dadurch, dass die vorstehend beschriebenen Schritte in umgekehrter Reihenfolge ausgeführt werden. So wird ausgehend von dem Zustand nach Figur 17 das Betätigungselement 27 gedrückt, um das Rastgesperre 26 zu lösen. Bei gedrücktem Betätigungselement 27 wird anschließend der Betätigungshebel 16 so weit um seine Drehachse W geschwenkt, bis er die in Figur 12 gezeigte horizontale Stellung einnimmt. Der Betätigungshebel 16 durchläuft während dieses Schwenkvorgangs die in den Figuren 18 und 19 gezeigten Positionen. Bei dem Schwenkvorgang wird der Exzenter 24 um die Drehachse W der Exzenterwelle 18 in der zweiten Drehrichtung R2 verschwenkt und dadurch der erste Schenkel 39 des Schwenkriegels 38 von der Gleitschiene 100 wegbewegt.

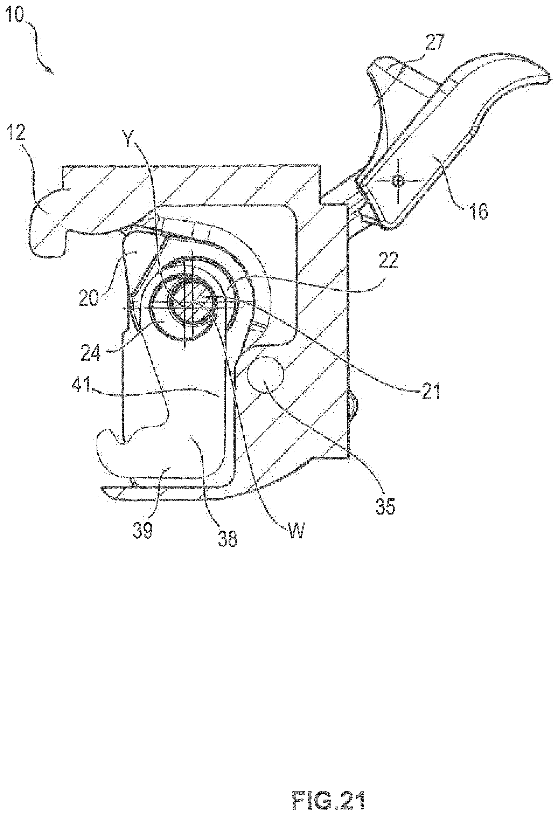

Bei weiterem Verschwenken des Betätigungshebels 16 in der zweiten Drehrichtung R2 wird der Exzenter 24 weiter um die Drehachse W der Exzenterwelle 18 in der zweiten Drehrichtung R2 verschwenkt und der Schwenkriegel 38 mitbewegt. Dabei wirkt die Schraubendruckfeder 54 einer durch das Mitbewegen bedingten Drehung des Schwenkriegels 38 entgegen, wodurch sich der Exzenter 24 relativ zu dem Schwenkriegel 38 um seine Längsachse Y dreht. Dabei wird der in Figur 4 gezeigte Stift 40 so weit entlang dem Langloch 64 in der zweiten Drehrichtung verdreht, bis der Stift 40 an dem zweiten Anschlag 68 des Schwenkriegels 38 anschlägt. Bei einer fortgesetzten Drehung des Betätigungshebels 16 in der zweiten Drehrichtung R2 wird der Schwenkriegel 38 durch den Anschlag mit dem Stift 40 zusammen mit dem Exzenter 24 um dessen Längsachse Y in der zweiten Drehrichtung R2 verschwenkt, bis der Schwenkriegel 38 in der in Figur 21 gezeigten geöffneten Stellung ist. Der Betätigungshebel 16 ist dabei relativ zu der in Figur 10 gezeigten horizontalen Stellung nach oben verschwenkt.

In der in Figur 21 erreichten Stellung kann die Spannklaue 10 vertikal nach oben bewegt werden, bis der hakenförmige Grundkörper 12 in der in Figur 11 gezeigten Position ist und die Spannklaue 10 in der in Figur 11 gezeigten, horizontalen Richtung von der Gleitschiene 100 wegbewegt werden kann. Nachdem die Spannklaue 10 wegbewegt ist, kann der Betätigungshebel 16 wieder in die entspannte in Figur 11 horizontale Stellung zurückverschwenkt werden, in der sich der Schwenkriegel 38 wieder in der in Figur 10 gezeigten aufnahmebereiten Stellung befindet, in die der Schwenkriegel 38 durch die Schraubendruckfeder 54 vorgespannt ist.

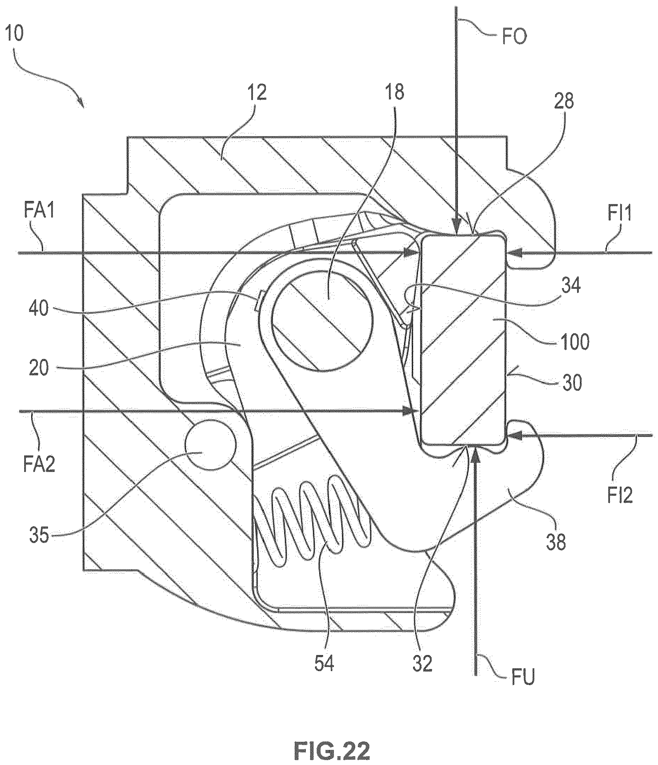

In der in Figur 22 gezeigten geschnittenen Seitenansicht der an der Gleitschiene 100 anliegenden Spannklaue 10 sind die in dem verriegelten Zustand der Klemmstruktur 14 auf die Gleitschiene 100 wirkenden Kräfte dargestellt. Dabei beaufschlagt der Grundkörper 12 die Gleitschiene 100 an ihrer oberen Schienenfläche 28 mit einer Kraft FO, an ihrer inneren Schienenfläche 30 mit einer Kraft FI1 und an ihrer äußeren Schienenfläche 34 mit einer Kraft FA2. Weiterhin beaufschlagt das Stützelement 20 die äußere Schienenfläche 34 mit einer Kraft FA1 und der Schwenkriegel 38 die untere Schienenfläche 32 mit einer Kraft FU und die innere Schienenfläche 30 mit einer Kraft FI2. Die auf die Gleitschiene 100 wirkenden Kräfte können durch ein Verschwenken des Betätigungshebels 16 so groß eingestellt werden, dass die Spannklaue 10 durch die zwischen der Spannklaue 10 und der Gleitschiene 100 wirkenden Reibungskräfte fest an der Gleitschiene 100 befestigt ist.

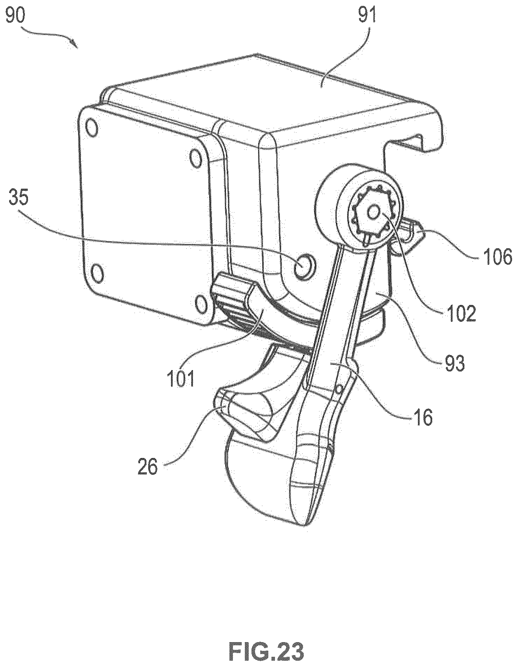

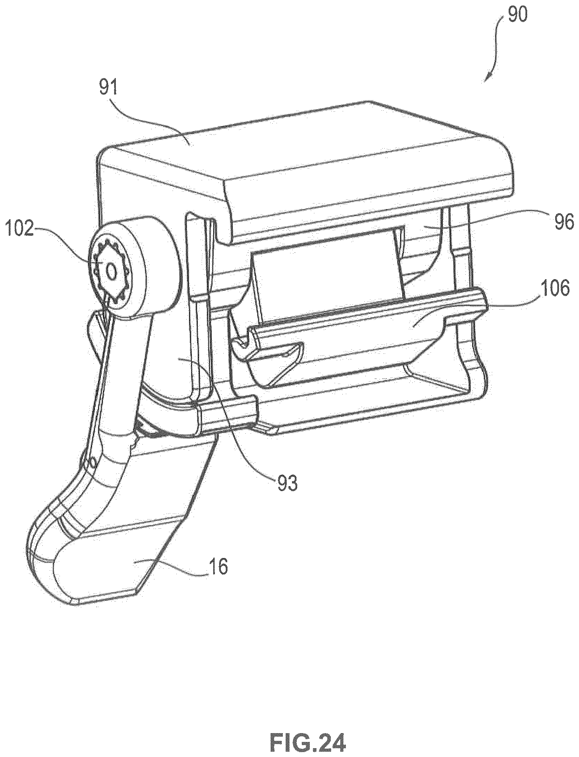

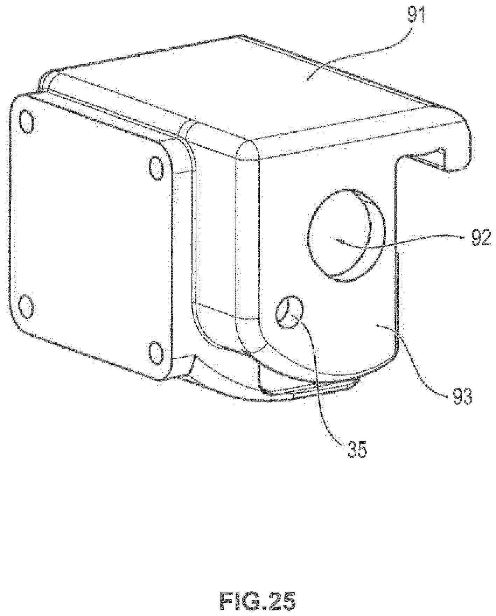

In den Figuren 23 und 24 ist jeweils eine perspektivische Ansicht einer Spannklaue 90 gemäß einer zweiten Ausführungsform gezeigt. Die Spannklaue 90 hat einen Grundkörper 91, der sich von dem Grundkörper 90 der ersten Ausführungsform unterscheidet. Im Unterschied zu der in Figur 3 gezeigten ersten Ausführungsform hat der in Figur 25 separat gezeigte Grundkörper 91 an der dem Betätigungshebel 16 zugewandten Seitenwand 93 eine Bohrung 92 anstelle der in der ersten Ausführungsform vorgesehenen Aussparung 94. Des Weiteren hat die Seitenwand 93 des Grundkörpers 91 an ihrer in Figur 3 unteren Seite eine größere Aussparung als die Seitenwand 95 der ersten Ausführungsform und es wurde auf die obere Kopplungsschnittstelle 13b verzichtet.

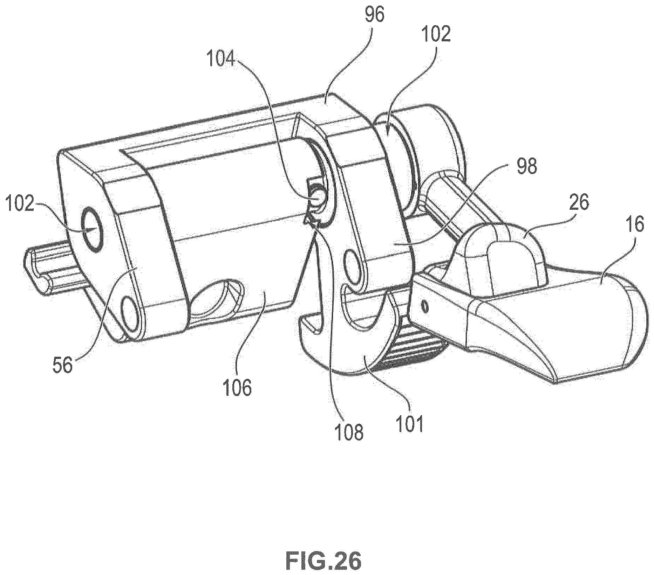

Ferner hat die zweite Ausführungsform ein Stützelement 96, dessen zweiter Schenkel 98 an seiner unteren Seite als Rastkörper 101 ausgebildet ist, wie in Figur 26 gezeigt ist. Der Rastkörper 101 des Stützelements 96 ist in Figur 23 unter der Seitenwand 93 des Grundkörpers 91 angeordnet.

Ein weiterer Unterschied zu der ersten Ausführungsform besteht darin, dass anstelle der Exzenterwelle 18 eine Exzenterwelle 102 vorgesehen ist, die einen relativ zu der ersten Ausführungsform versetzt angeordneten Stift 104 hat. Der Stift 104 ist direkt neben dem zweiten Schenkel 98 und relativ zu dem Stift 40 der ersten Ausführungsform um 90° um die Längsachse Y des Exzenters 24 gedreht angeordnet.

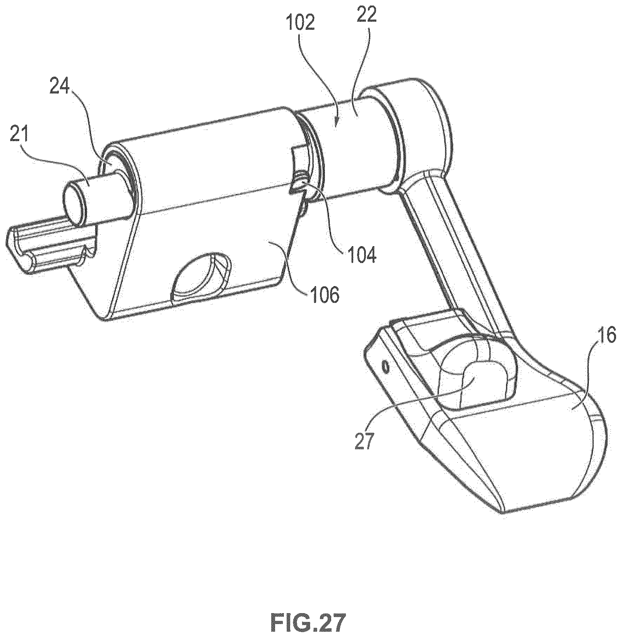

Des Weiteren ist anstelle des Schwenkriegels 38 ein Schwenkriegel 106 vorgesehen, dessen Langloch entsprechend der Anordnung des Stifts 104 versetzt ist und der eine Aussparung 108 anstelle des ersten Anschlags 66 hat. Ferner hat die Exzenterwelle 102 keinen dritten Wellenabschnitt, wie in Figur 27 gezeigt ist.

Durch die vorstehend genannten Unterschiede zu der ersten Ausführungsform ist die zweite Ausführungsform montagefreundlicher und günstiger herzustellen.

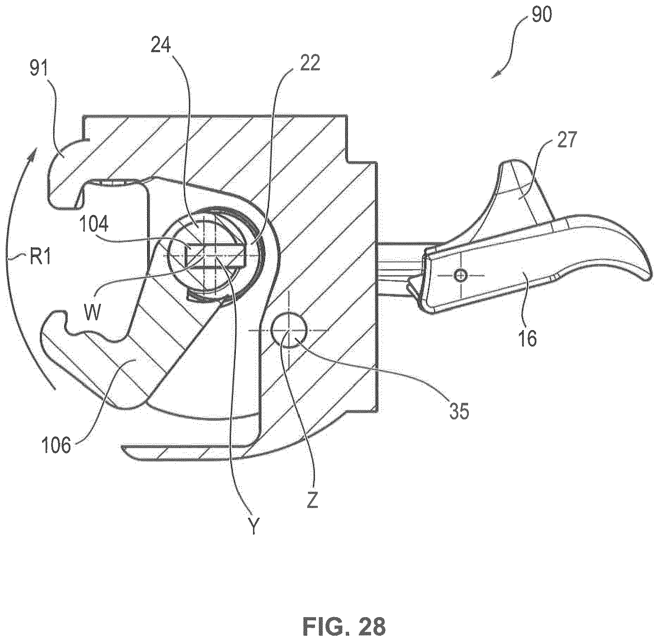

Die unterschiedliche Ausführung des Schwenkriegels 106 wird im folgenden anhand der Figuren 28 bis 31 erläutert, in denen die Spannklaue 90 unter Ausblendung des Stützelements 96 jeweils in einem Querschnitt durch den Stift 104 in verschiedenen Stellungen dargestellt ist.

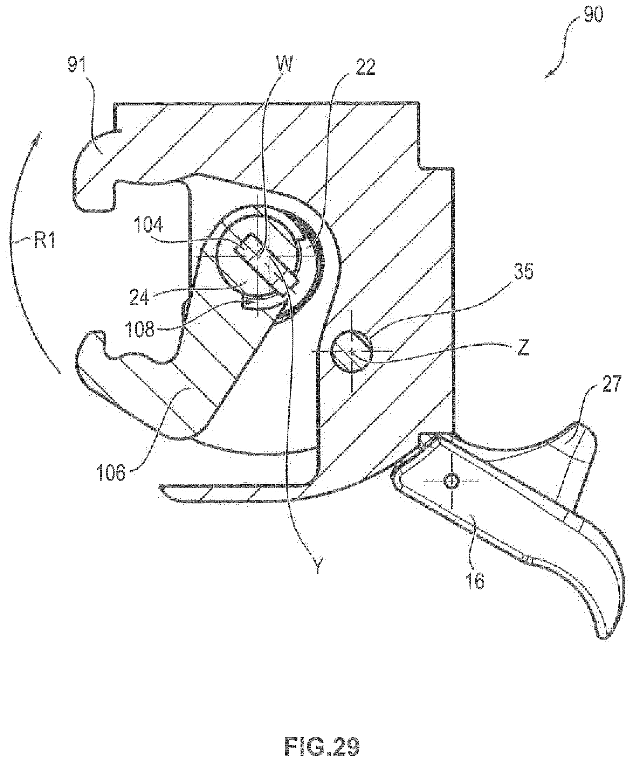

Ausgehend von der aufnahmebereiten Stellung in Figur 28 wird der Stift 104 bei einer Schwenkbewegung des Betätigungshebels 16 relativ zu dem Schwenkriegel 106 um die Längsachse Y des Exzenters 24 in der ersten Drehrichtung R1 in die in Figur 29 gezeigte Stellung verschwenkt. Die Klinken 80 und 82 des Betätigungshebels 16 sind dabei mit dem ersten Zahn der Verzahnung des Rastkörpers 101 in Eingriff. Diese Position des Betätigungshebels 16 entspricht der geschlossenen Stellung des Schwenkriegels 106 und der verriegelten Klemmstruktur 14 bei Befestigung der Spannklaue 90 an einer besonders großen Gleitschiene.

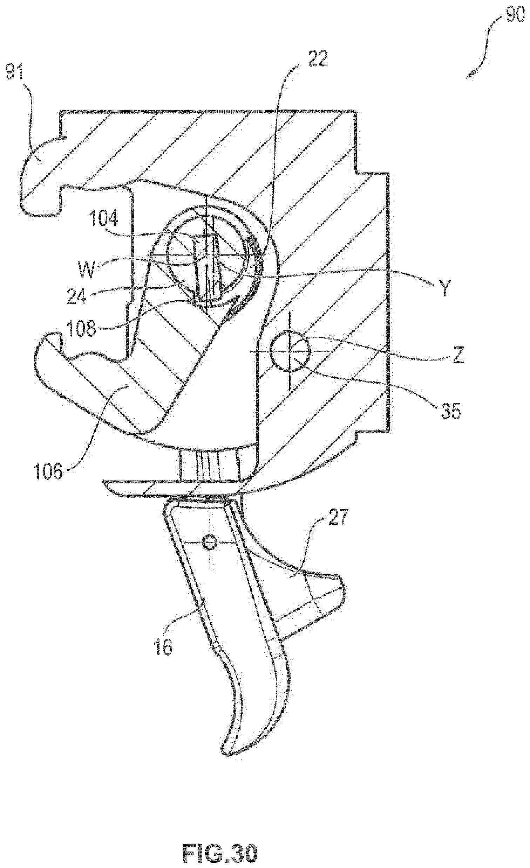

Bei einer Fortsetzung der Schwenkbewegung in die in Figur 30 gezeigte Stellung wird der Stift 104 in die Aussparung 108 des Schwenkriegels 106 verschwenkt. In Figur 30 ist der Schwenkriegel 106 in der durch eine solche Schwenkbewegung resultierenden geschlossenen Stellung gezeigt. Der Schwenkriegel 106 wird durch die Stellung des Exzenters 24 in der in Figur 30 gezeigten Stellung an der Gleitschiene 100 fixiert. Der Stift 104 kontaktiert den Schwenkriegel 106 nicht, verhindert aber ein Lösen der Spannklaue 90 von der Gleitschiene 100, wenn die Spannklaue 90 gegen die Gleitschiene 100 gedrückt wird.

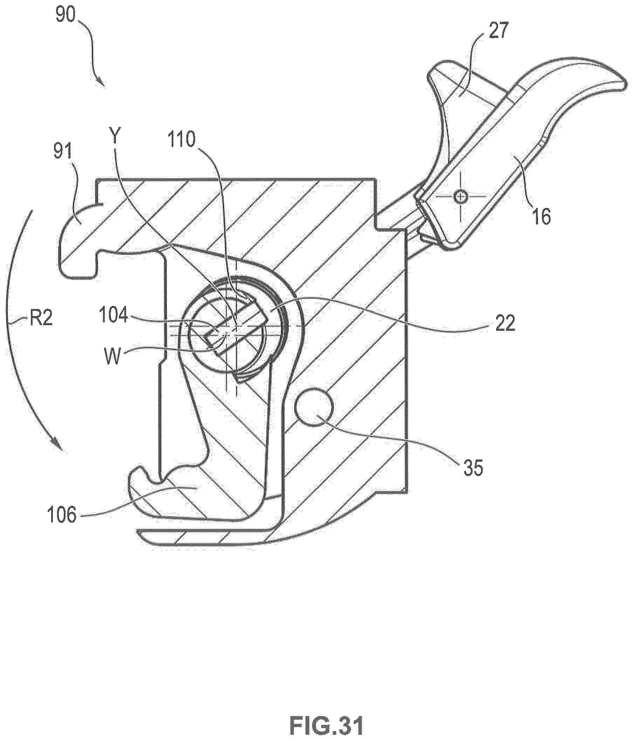

Dagegen kontaktiert der Stift 104 den Schwenkriegel 106 an einem Anschlag 110, der dem zweiten Anschlag 68 der Spannklaue 10 gemäß der ersten Ausführungsform entspricht, in der geöffneten Stellung bei entsprechender Verschwenkung des Betätigungshebels 16 um die Drehachse W in die zweite Drehrichtung R2, wie in Figur 31 gezeigt ist.

Im Übrigen entsprechen Aufbau und Funktion der Spannklaue 90 der Spannklaue 10 gemäß der ersten Ausführungsform.

### Bezugszeichenliste

- 10,90: Spannklauen
- 12,91: Grundkörper
- 13a, 13b: Kopplungsschnittstellen
- 14: Klemmstruktur
- 16: Betätigungshebel
- 18,102: Exzenterwellen
- 20, 96: Stützelemente
- 21: erster Wellenabschnitt
- 22: zweiter Wellenabschnitt
- 23: dritter Wellenabschnitt
- 24: Exzenter
- 25, 101: Rastkörper
- 26: Rastgesperre
- 27: Betätigungselement
- 28: obere Schienenfläche
- 29: erste Schienenkante
- 30: innere Schienenfläche
- 31: zweite Schienenkante
- 32: untere Schienenfläche
- 34: äußere Schienenfläche
- 35: Durchgangslöcher
- 36, 37: Anlagebereiche
- 38, 106: Schwenkriegel
- 39: erster Schenkel
- 40, 104: Stifte
- 41: zweiter Schenkel
- 42,44: Kantenaussparungen
- 45: Bereich
- 46 bis 53: Anlageflächen
- 54: Schraubendruckfeder
- 56, 58, 98: Schenkel
- 60 bis 63: Öffnungen
- 64: Langloch
- 66, 68,110: Anschläge
- 71, 72, 93, 95: Seitenwände
- 76: Aufnahmeraum
- 78: Sägeverzahnung
- 80, 82: Klinken
- 92: Bohrung
- 108: Aussparung
- W, X, Y, Z: Längsachsen
- R1, R2: Drehrichtungen

## Patentansprüche

1. Spannklaue (10) zur Anbringung an einer im Querschnitt rechteckigen Gleitschiene (100) eines Operationstisches, mit
einem Grundkörper (12) mit mindestens einer zur Anlage an der Gleitschiene (100) ausgebildeten Anlagefläche (46),
einer an dem Grundkörper (12) angebrachten Klemmstruktur (14), die ein erstes Anlageelement (20) und ein zweites Anlageelement (38) aufweist, und
einem mit der Klemmstruktur (14) wirkverbundenen Betätigungsorgan (16), durch dessen Betätigung die Klemmstruktur (14) in einen verriegelten Zustand bringbar ist, in dem die Anlagefläche (46) des Grundkörpers (12) und die Anlageelemente (20, 38) der Klemmstruktur (14) an der Gleitschiene (100) anliegen,
**dadurch gekennzeichnet, dass** das erste Anlageelement (20) um eine zur Längsachse (X) der Gleitschiene (100) parallele erste Schwenkachse (Z), die relativ zu dem Grundkörper (12) ortsfest ist, schwenkbar gelagert ist,
das zweite Anlageelement (38) um eine zu der ersten Schwenkachse (Z) parallele zweite Schwenkachse (Y), die relativ zu dem Grundkörper bewegbar ist, schwenkbar gelagert ist, und
das Betätigungsorgan (16) mit dem zweiten Anlageelement (38) wirkverbunden ist,
wobei mit Betätigen des Betätigungsorgans (16) das erste Anlageelement (20) um die erste Schwenkachse (Z) in Anlage an die Gleitschiene (100) schwenkbar ist.

2. Spannklaue (10) nach Anspruch 1, **dadurch gekennzeichnet, dass** die Klemmstruktur (14) eine mit dem Betätigungsorgan (16) gekoppelte und gemeinsam mit dem ersten Anlageelement (20) um die erste Schwenkachse (Z) verschwenkbare Exzenterwelle (18) aufweist,
die Exzenterwelle (18) mindestens einen um eine Drehachse (W) der Exzenterwelle (18) drehbaren Wellenabschnitt (21, 22) und einen exzentrisch zu der Drehachse (W) der Exzenterwelle (18) ausgebildeten Exzenter (24) hat,
die zweite Schwenkachse (Y) relativ zu dem Exzenter (24) ortsfest ist, und
das zweite Anlageelement (38) an dem Exzenter (24) schwenkbar gelagert ist.

3. Spannklaue (10) nach Anspruch 1 oder 2, **dadurch gekennzeichnet, dass** die Anlagefläche (46) des Grundkörpers (12) in dem verriegelten Zustand der Klemmstruktur (14) an einer ersten Seite (28) der Gleitschiene (100) anliegt,
eine Anlagefläche (53) des ersten Anlageelements (20) in dem verriegelten Zustand der Klemmstruktur (14) an einer zweiten Seite (34) der Gleitschiene (100) anliegt,
eine Anlagefläche (50) des zweiten Anlageelements (38) in dem verriegelten Zustand der Klemmstruktur (14) an einer dritten Seite (30) der Gleitschiene (100) anliegt, und
eine weitere Anlagefläche (48) des Grundkörpers (12) in dem verriegelten Zustand der Klemmstruktur (14) an einer vierten Seite (30) der Gleitschiene (100) anliegt.

4. Spannklaue (10) nach Anspruch 3, **dadurch gekennzeichnet, dass** eine weitere Anlagefläche (52) des zweiten Anlageelements (38) in dem verriegelten Zustand der Klemmstruktur (14) an der vierten Seite (30) der Gleitschiene (100) anliegt.

5. Spannklaue (10) nach einem der Ansprüche 2 bis 4, **dadurch gekennzeichnet, dass** der Wellenabschnitt (21, 22) der Exzenterwelle (18) an dem ersten Anlageelement (20) um die Drehachse (W) der Exzenterwelle (18) drehbar gelagert ist,
die Exzenterwelle (18) durch Betätigen des Betätigungsorgans (16) um ihre Drehachse (W) drehbar ist, und
der Exzenter (24) beim Drehen der Exzenterwelle (18) um deren Drehachse (W) verschwenkt wird.

6. Spannklaue (10) nach einem der Ansprüche 2 bis 5, **dadurch gekennzeichnet, dass** das zweite Anlageelement (38) ein Durchgangsloch (59) hat, durch das der Exzenter (24) geführt ist,
der mindestens eine Wellenabschnitt einen ersten Wellenabschnitt (21) und einen zweiten Wellenabschnitt (22) umfasst, und
der Exzenter (24) zwischen dem ersten Wellenabschnitt (21) und dem zweiten Wellenabschnitt (22) angeordnet ist.

7. Spannklaue (10) nach Anspruch 6, **dadurch gekennzeichnet, dass** der erste Wellenabschnitt (21), der zweite Wellenabschnitt (22) und der Exzenter (24) jeweils zylinderförmig sind,
der erste Wellenabschnitt (21) und der zweite Wellenabschnitt (22) eine gemeinsame die Drehachse der Exzenterwelle (18) bildende Längsachse (W) haben, und
der Exzenter (24) derart relativ zu den Wellenabschnitten (21, 22) angeordnet ist, dass die Längsachse (Y) des Exzenters (24) in einem Abstand parallel zu der Längsachse (W) der Wellenabschnitte (21, 22) angeordnet ist.

8. Spannklaue (10) nach Anspruch 6 oder 7, **dadurch gekennzeichnet, dass** das erste Anlageelement (20) einen ersten Schenkel (56) und einen zweiten Schenkel (58) hat,
das zweite Anlageelement (38) zwischen dem ersten Schenkel (56) und dem zweiten Schenkel (58) des ersten Anlageelements (20) angeordnet ist, und
der erste Schenkel (56) eine erste Öffnung (61) und der zweite Schenkel (58) eine zweite Öffnung (63) hat, wobei der erste Wellenabschnitt (21) durch die erste Öffnung (61) und der zweite Wellenabschnitt (22) durch die zweite Öffnung (63) geführt ist.

9. Spannklaue (10) nach einem der Ansprüche 2 bis 8, **dadurch gekennzeichnet, dass** ein Stift (40) mit dem Exzenter (24) verbunden ist, der in eine Aussparung (64) des zweiten Anlageelements (38) ragt,
der Stift (40) bei einer Drehung der Exzenterwelle (18) um ihre Drehachse (W) mit dem zweiten Anlageelement (38) in Eingriff bringbar ist, und
das zweite Anlageelement (38) bei einer weiteren Drehung der Exzenterwelle (18) um ihre Drehachse (W) und bei in Eingriff stehendem Stift (40) um die zweite Schwenkachse (Y) verschwenkt wird.

10. Spannklaue (10) nach einem der vorhergehenden Ansprüche, **dadurch gekennzeichnet, dass** die Klemmstruktur (14) ein Vorspannelement (54) aufweist, durch das das zweite Anlageelement (38) in eine aufnahmebereite Stellung vorspannbar ist, und
die Anlagefläche (50) des zweiten Anlageelements (38) bei an der Gleitschiene (100) anliegendem Grundkörper (12) durch das Vorspannelement (54) an die Gleitschiene (100) gedrückt wird.

11. Spannklaue (10) nach einem der Ansprüche 3 bis 10, **dadurch gekennzeichnet, dass** der Grundkörper (12) eine zwischen der Anlagefläche (46) und der weiteren Anlagefläche (48) angeordnete Kantenaussparung (42) hat, die die sich zwischen der ersten Seite (28) der Gleitschiene (100) und der vierten Seite (30) der Gleitschiene (100) befindende erste Schienenkante (29) berührungslos aufnimmt.

12. Spannklaue (10) nach einem der Ansprüche 3 bis 11, **dadurch gekennzeichnet, dass** das zweite Anlageelement (38) an einem Kantenbereich der Gleitschiene (100) angreift, in dem sich die zwischen der dritten Seite (32) der Gleitschiene (100) und der vierten Seite (30) der Gleitschiene (100) angeordnete zweite Schienenkante (31) befindet, und
das zweite Anlageelement (38) eine Kantenaussparung (44) hat, die die zweite Schienenkante (31) berührungslos aufnimmt.

13. Spannklaue (10) nach einem der Ansprüche 2 bis 12, **dadurch gekennzeichnet, dass** das Betätigungsorgan (16) ein fest mit der Exzenterwelle (18) verbundener und mit der Exzenterwelle (18) um ihre Drehachse (W) schwenkbarer Betätigungshebel (16) ist, und
ein Rastgesperre (26) vorgesehen ist, über das der Betätigungshebel (16) in dem verriegelten Zustand der Klemmstruktur (14) arretierbar ist.

14. Spannklaue (10) nach Anspruch 13, **dadurch gekennzeichnet, dass** das Rastgesperre (26) einen mit dem ersten Anlageelement (20) verbundenen oder mit diesem einstückig ausgeführten Rastkörper (25) und mindestens eine mit dem Betätigungshebel (16) verbundene Klinke (80, 82) umfasst, und
die Klinke (80, 82) mit dem Rastkörper (25) in Verzahnungseingriff bringbar und aus diesem lösbar ist, wobei die Klinke (80, 82) bei bestehendem Verzahnungseingriff mit dem Rastkörper (25) den Betätigungshebel (16) arretiert.

## Claims

1. A clamping claw (10) for attachment to a slide rail (100) of rectangular cross-section of an operating table, comprising
a main body (12) having at least one bearing surface (46) configured to bear against the slide rail (100),
a clamp structure (14), which is attached to the main body (12) and includes a first bearing element (20) and a second bearing element (38),
and an actuating member (16), which is operatively connected to the clamp structure (14) and the actuation of which allows the clamp structure (14) to be brought into a locked state in which the bearing surface (46) of the main body (12) and the bearing elements (20, 38) of the clamp structure (14) bear against the slide rail (100),
**characterized in that** the first bearing element (20) is mounted pivotably about a first pivot axis (Z), which is parallel to the longitudinal axis (X) of the slide rail (100) and stationary relative to the main body (12),
the second bearing element (38) is mounted pivotably about a second pivot axis (Y), which is parallel to the first pivot axis (Z) and movable relative to the main body, and
the actuating member (16) is operatively connected to the second bearing element (38), wherein upon actuation of the actuating member (16), the first bearing element (20) is pivotable about the first pivot axis (Z) so as to bear against the slide rail (100).

2. The clamping claw (10) according to Claim 1, **characterized in that** the clamp structure (14) includes an eccentric shaft (18), which is coupled to the actuating member (16) and is pivotable together with the first bearing element (20) about the first pivot axis (Z),
the eccentric shaft (18) includes at least one shaft section (21, 22), which is rotatable about a rotational axis (W) of the eccentric shaft (18), and a cam (24), which is eccentric to the rotational axis (W) of the eccentric shaft (18),
the second pivot axis (Y) is stationary relative to the cam (24),
and the second bearing element (38) is mounted pivotably on the cam (24).

3. The clamping claw (10) according to Claim 1 or 2, **characterized in that** when the clamp structure (14) is in the locked state, the bearing surface (46) of the main body (12) bears against a first side (28) of the slide rail (100),
when the clamp structure (14) is in the locked state, a bearing surface (53) of the first bearing element (20) bears against a second side (34) of the slide rail (100),
when the clamp structure (14) is in the locked state, a bearing surface (50) of the second bearing element (38) bears against a third side (30) of the slide rail (100), and
when the clamp structure (14) is in the locked state, a further bearing surface (48) of the main body (12) bears against a fourth side (30) of the slide rail (100).

4. The clamping claw (10) according to Claim 3, **characterized in that** when the clamp structure (14) is in the locked state, an additional bearing surface (52) of the second bearing element (38) bears against the fourth side (30) of the slide rail (100).

5. The clamping claw (10) according to any one of Claims 2 to 4, **characterized in that** the shaft section (21, 22) of the eccentric shaft (18) is mounted on the first bearing element (20) so as to rotate about the rotational axis (W) of the eccentric shaft (18),
the eccentric shaft (18) can be rotated by actuating the actuating member (16) about its rotational axis (W),
and the rotation of the eccentric shaft (18) about its rotational axis (W) causes the cam (24) to pivot.

6. The clamping claw (10) according to any one of Claims 2 to 5, **characterized in that** the second bearing element (38) has a through hole (59) through which the cam (24) is guided, the at least one shaft section comprises a first shaft section (21) and a second shaft section (22), and
the cam (24) is disposed between the first shaft section (21) and the second shaft section (22).

7. The clamping claw (10) according to Claim 6, **characterized in that** the first shaft section (21), the second shaft section (22) and the cam (24) are each cylindrical,
the first shaft section (21) and the second shaft section (22) have a common longitudinal axis (W), which forms the rotational axis of the eccentric shaft (18), and
the cam (24) is disposed relative to the shaft sections (21, 22) such that the longitudinal axis (Y) of the cam (24) is arranged spaced from and parallel to the longitudinal axis (W) of the shaft sections (21, 22).

8. The clamping claw (10) according to Claim 6 or 7, **characterized in that** the first bearing element (20) has a first arm (56) and a second arm (58),
the second bearing element (38) is disposed between the first arm (56) and the second arm (58) of the first bearing element (20), and
the first arm (56) has a first opening (61) and the second arm (58) has a second opening (63), wherein the first shaft section (21) passes through the first opening (61) and the second shaft section (22) passes through the second opening (63).

9. The clamping claw (10) according to any one of Claims 2 to 8, **characterized in that** a pin (40) is connected to the cam (24) and protrudes into a recess (64) in the second bearing element (38),
upon rotation of the eccentric shaft (18) about its rotational axis (W), the pin (40) can be brought into engagement with the second bearing element (38), and
as the rotation of the eccentric shaft (18) about its rotational axis (W) continues, and with the pin (40) in engagement, the second bearing element (38) is pivoted about the second pivot axis (Y).

10. The clamping claw (10) according to any one of the preceding claims, **characterized in that** the clamp structure (14) includes a prestressing element (54), by which the second bearing element (38) can be prestressed into a receiving position, and
when the main body (12) is bearing against the slide rail (100), the bearing surface (50) of the second bearing element (38) is pressed by the prestressing element (54) against the slide rail (100).

11. The clamping claw (10) according to any one of Claims 3 to 10, **characterized in that** the main body (12) includes an edge recess (42), located between the bearing surface (46) and the additional bearing surface (48), which edge recess receives the first rail edge (29), which is located between the first side (28) of the slide rail (100) and the fourth side (30) of the slide rail (100), without contact.

12. The clamping claw (10) according to any one of Claims 3 to 11, **characterized in that** the second bearing element (38) bears against an edge region of the slide rail (100) in which the second rail edge (31), which is situated between the third side (32) of the slide rail (100) and the fourth side (30) of the slide rail (100), is located, and
the second bearing element (38) has an edge recess (44) that receives the second rail edge (31) without contact.

13. The clamping claw (10) according to any one of Claims 2 to 12, **characterized in that** the actuating member (16) is an actuating lever (16) that is fixedly connected to the eccentric shaft (18) and is pivotable with the eccentric shaft (18) about the rotational axis (W) thereof, and
a pawl and ratchet mechanism (26) is provided, via which the actuating lever (16) can be locked in place when the clamp structure (14) is in the locked state.

14. The clamping claw (10) according to Claim 13, **characterized in that** the pawl and ratchet mechanism (26) comprises a ratchet element (25), which is connected to the first bearing element (20) or is embodied as integral therewith, and at least one pawl (80, 82), which is connected to the actuating lever (16), and
the pawl (80, 82) can be brought into interlocking engagement with and released from the ratchet element (25), wherein when the pawl (80, 82) is in interlocking engagement with the ratchet element (25), the actuating lever (16) is locked in place.

## Revendications

1. Griffe de serrage (10) pour le montage sur une glissière (100) de section transversale rectangulaire d'une table d'opération, avec
un corps de base (12) avec au moins une surface d'appui (46) réalisée pour l'appui sur la glissière (100),
une structure de serrage (14) montée sur le corps de base (12) qui présente un premier élément d'appui (20) et un second élément d'appui (38), et
un organe d'actionnement (16) raccordé activement à la structure de serrage (14) par l'actionnement duquel la structure de serrage (14) peut être amenée dans un état verrouillé, dans lequel la surface d'appui (46) du corps de base (12) et les éléments d'appui (20, 38) de la structure de serrage (14) reposent contre la glissière (100),
**caractérisée en ce que** le premier élément d'appui (20) est logé de manière à pouvoir pivoter autour d'un premier axe de pivotement (Z) parallèle à l'axe longitudinal (X) de la glissière (100) qui est fixe par rapport au corps de base (12), le second élément d'appui (38) est logé de manière à pouvoir pivoter autour d'un second axe de pivotement (Y) parallèle au premier axe de pivotement (Z) qui est mobile par rapport au corps de base, et
l'organe d'actionnement (16) est raccordé activement au second élément d'appui (38),
dans lequel avec l'actionnement de l'organe d'actionnement (16) le premier élément d'appui (20) peut pivoter autour du premier axe de pivotement (Z) en appui sur la glissière (100).

2. Griffe de serrage (10) selon la revendication 1, **caractérisée en ce que** la structure de serrage (14) présente un arbre à excentrique (18) pivotant autour du premier axe de pivotement (Z) conjointement avec le premier élément d'appui (20) et couplé à l'organe d'actionnement (16),
l'arbre à excentrique (18) présente au moins une section d'arbre (21, 22) pouvant tourner autour d'un axe de rotation (W) de l'arbre à excentrique (18) et une excentrique (24) réalisée de manière excentrée à l'axe de rotation (W) de l'arbre à excentrique (18),
le second axe de pivotement (Y) est fixe par rapport à l'excentrique (24), et
le second élément d'appui (38) est logé de manière à pouvoir pivoter sur l'excentrique (24).

3. Griffe de serrage (10) selon la revendication 1 ou 2, **caractérisée en ce que** la surface d'appui (46) du corps de base (12) repose dans l'état verrouillé de la structure de serrage (14) contre un premier côté (28) de la glissière (100), une surface d'appui (53) du premier élément d'appui (20) repose dans l'état verrouillé de la structure de serrage (14) contre un deuxième côté (34) de la glissière (100),
une surface d'appui (50) du second élément d'appui (38) repose dans l'état verrouillé de la structure de serrage (14) contre un troisième côté (30) de la glissière (100), et
une autre surface d'appui (48) du corps de base (12) dans l'état verrouillé de la structure de serrage (14) repose contre un quatrième côté (30) de la glissière (100).

4. Griffe de serrage (10) selon la revendication 3, **caractérisée en ce qu'**une autre surface d'appui (52) du second élément d'appui (38) dans l'état verrouillé de la structure de serrage (14) repose contre le quatrième côté (30) de la glissière (100).

5. Griffe de serrage (10) selon l'une quelconque des revendications 2 à 4, **caractérisée en ce que** la section d'arbre (21, 22) de l'arbre à excentrique (18) est logée de manière rotative sur le premier élément d'appui (20) autour de l'axe de rotation (W) de l'arbre à excentrique (18),
l'arbre à excentrique (18) peut tourner par actionnement de l'organe d'actionnement (16) autour de son axe de rotation (W), et
l'excentrique (24) est pivotée lors de la rotation de l'arbre à excentrique (18) autour de son axe de rotation (W).

6. Griffe de serrage (10) selon l'une quelconque des revendications 2 à 5, **caractérisée en ce que** le second élément d'appui (38) présente un trou débouchant (59) par lequel l'excentrique (24) est guidée,
l'au moins une section d'arbre comporte une première section d'arbre (21) et une seconde section d'arbre (22), et l'excentrique (24) est agencée entre la première section d'arbre (21) et la seconde section d'arbre (22).

7. Griffe de serrage (10) selon la revendication 6, **caractérisée en ce que** la première section d'arbre (21), la seconde section d'arbre (22) et l'excentrique (24) sont respectivement en forme de cylindre,
la première section d'arbre (21) et la seconde section d'arbre (22) présentent un axe longitudinal (W) commun formant l'axe de rotation de l'arbre à excentrique (18), et l'excentrique (24) est agencée par rapport aux sections d'arbre (21, 22) de telle manière que l'axe longitudinal (Y) de l'excentrique (24) soit agencé à une distance parallèle à l'axe longitudinal (W) des sections d'arbre (21, 22).

8. Griffe de serrage (10) selon la revendication 6 ou 7, **caractérisée en ce que** le premier élément d'appui (20) présente une première branche (56) et une seconde branche (58), le second élément d'appui (38) est agencé entre la première branche (56) et la seconde branche (58) du premier élément d'appui (20), et
la première branche (56) présente une première ouverture (61) et la seconde branche (58) présente une seconde ouverture (63), dans lequel la première section d'arbre (21) est guidée par la première ouverture (61) et la seconde section d'arbre (22) par la seconde ouverture (63).

9. Griffe de serrage (10) selon l'une quelconque des revendications 2 à 8, **caractérisée en ce qu'**une tige (40) est raccordée à l'excentrique (24) qui pénètre dans un évidement (64) du second élément d'appui (38),
la tige (40) peut être amenée en prise lors d'une rotation de l'arbre à excentrique (18) autour de son axe de rotation (W) avec le second élément d'appui (38), et
le second élément d'appui (38) est pivoté lors d'une autre rotation de l'arbre à excentrique (18) autour de son axe de rotation (W) et en cas de tige (40) se trouvant en prise autour du second axe de pivotement (Y).

10. Griffe de serrage (10) selon l'une quelconque des revendications précédentes, **caractérisée en ce que** la structure de serrage (14) présente un élément de précontrainte (54) par lequel le second élément d'appui (38) peut être précontraint dans une position prête à recevoir, et la surface d'appui (50) du second élément d'appui (38) est pressée en cas de corps de base (12) reposant contre la glissière (100) par l'élément de précontrainte (54) contre la glissière (100).

11. Griffe de serrage (10) selon l'une quelconque des revendications 3 à 10, **caractérisée en ce que** le corps de base (12) présente un évidement d'arête (42) agencé entre la surface d'appui (46) et l'autre surface d'appui (48) qui reçoit sans contact la première arête de rail (29) se trouvant entre le premier côté (28) de la glissière (100) et le quatrième côté (30) de la glissière (100).

12. Griffe de serrage (10) selon l'une quelconque des revendications 3 à 11, **caractérisée en ce que** le second élément d'appui (38) agit sur une zone d'arête de la glissière (100) dans laquelle la seconde arête de rail (31) agencée entre le troisième côté (32) de la glissière (100) et le quatrième côté (30) de la glissière (100) se trouve, et
le second élément d'appui (38) présente un évidement d'arête (44) qui reçoit sans contact la seconde arête de rail (31).

13. Griffe de serrage (10) selon l'une quelconque des revendications 2 à 12, **caractérisée en ce que** l'organe d'actionnement (16) est un levier d'actionnement (16) raccordé à l'arbre à excentrique (18) et pivotant avec l'arbre à excentrique (18) autour de son axe de rotation (W), et
un dispositif d'encliquetage (26) est prévu, par lequel le levier d'actionnement (16) peut être arrêté dans l'état verrouillé de la structure de serrage (14).

14. Griffe de serrage (10) selon la revendication 13, **caractérisée en ce que** le dispositif d'encliquetage (26) comporte un corps d'encliquetage (25) réalisé d'un seul tenant avec celui-ci ou raccordé au premier élément d'appui (20) et au moins un cliquet (80, 82) raccordé au levier d'actionnement (16), et
le cliquet (80, 82) peut être amené en prise de denture avec le corps d'encliquetage (25) et peut être détaché de celui-ci, dans lequel le cliquet (80, 82) arrête en cas de prise de denture existante avec le corps d'encliquetage (25) le levier d'actionnement (16).
